# EUROPÄISCHE PATENTSCHRIFT

(11) **EP 4 334 628 B1**
(45) Veröffentlichungstag und Bekanntmachung des Hinweises auf die Patenterteilung: **21.08.2024**
(21) Anmeldenummer: 22717066.9
(22) Anmeldetag: 18.03.2022
(51) Int. Cl.: F16N 39/06, F01M 11/03, F01M 1/10, F16C 33/66

(54) **REINIGUNGSEINRICHTUNG FÜR FLÜSSIGKEITEN, INSBESONDERE FÜR ÖLFLÜSSIGKEITEN**
CLEANING DEVICE FOR LIQUIDS, IN PARTICULAR FOR OIL-BASED LIQUIDS
DISPOSITIF DE NETTOYAGE POUR LIQUIDES, EN PARTICULIER POUR LIQUIDES À BASE D'HUILE

(30) Priorität: 07.05.2021 DE 102021204652
(43) Veröffentlichungstag der Anmeldung: 13.03.2024
(73) Patentinhaber: SMS Group GmbH, 40237 Düsseldorf (DE)
(72) Erfinder: MOHR, Christian, 50170 Kerpen (DE); WYPDLO, Markus, 52062 Aachen (DE); STROKOW, Nikolai, 41063 Mönchengladbach (DE)
(74) Vertreter: Kross, Ulrich
(86) Internationale Anmeldenummer: PCT/EP2022/057126
(87) Internationale Veröffentlichungsnummer: WO 2022/233489

(56) Entgegenhaltungen:
- EP-A1- 1 091 163
- CN-A- 105 864 186
- CN-A- 110 671 549
- DE-A1- 102018 113 226
- DE-A1- 102020 000 601
- DE-A1- 19 923 415
- US-A- 3 480 149
- US-A- 4 790 938
- US-A- 5 245 891
- US-A1- 2011 073 546

## Beschreibung

Die Erfindung betrifft eine Reinigungseinrichtung für Flüssigkeiten nach dem Oberbegriff von Anspruch 1, 15 und 18.

Im Betrieb von ölführenden Systemen oder Maschinen wird im Allgemeinen angestrebt, dass darin enthaltenes Öl möglichst sauber und frei von jeglichen Verunreinigungen ist. Gleichwohl lässt es sich in der Praxis auch bei noch so großer Sorgfalt nicht vermeiden, dass kleinste und feinste Schmutzpartikel in ein ölführendes System eindringen und dort verbleiben. Solche Schmutzpartikel können aus Sanden und Korunden aus Schleifprozessen oder aus Herstellungsprozessen von Schmiede- und Gußteilen bestehen, oder auch aus vielen anderen metallischen Partikeln.

Ein weiterer Schmutzeintrag findet durch Verschleiß innerhalb von ölführenden Systemen statt. Diesbezüglich besteht auch eine Art Selbstverstärkungseffekt: Dies bedeutet, dass durch Verschleiß mehr Verschmutzung entsteht, und dadurch wiederum mehr Verschleiß.

Nach dem Stand der Technik ist eine Einrichtung zum Aufnehmen und Festhalten von Verunreinigungen in Flüssigkeiten in einem umlaufende Maschinenelemente aufnehmenden Gehäuse bekannt, bei dem in einem Bodenbereich des Gehäuses eine Reinigungsmatte angebracht ist, die eine poröse Struktur (z.B. bei JP 59 062 797 A1) oder eine faserige Beschaffenheit (z.B. bei EP 1 091 163 A1) aufweisen kann. Jedenfalls wird mit einer solchen Reinigungsmatte erreicht, dass absinkende Schmutzpartikel darin dauerhaft festgehalten und somit einem weiteren Umlauf in dem Maschinengehäuse entzogen werden.

Der vorstehend genannte Stand der Technik ist mit dem Nachteil verbunden, dass das Einbringen einer Reinigungsmatte in das Gehäuse und deren Positionierung auf einer Bodenfläche des Gehäuses vergleichsweise aufwendig ist. Hinzu tritt das Erfordernis, dass für ein solches Anbringen der Reinigungsmatte auf der Bodenfläche des Gehäuses zu gewährleisten ist, dass weitere bewegte Teile in dem Gehäuse einen ausreichenden Abstand von der Reinigungsmatte aufweisen.

Aus US 4 790 938 A, US 5 245 891 A, US 3 480 149 A und DE 10 2018 113226 A1 sind jeweils eine Reinigungseinrichtung nach dem Oberbegriff von Anspruch 1 bekannt.

Aus US 2011/073546 A1 ist eine Reinigungseinrichtung nach dem Oberbegriff von Anspruch 15 bekannt.

Aus DE 10 2020 000601 A1, CN 105 864 186 A und CN 110 671 549 sind jeweils eine Reinigungseinrichtung nach dem Oberbegriff von Anspruch 18 bekannt.

Entsprechend liegt der Erfindung die Aufgabe zugrunde, die Bereitstellung eines Reinigungskörpers in einem Gehäuse, in dem Flüssigkeit gehalten oder geführt wird, mit preiswerten Mitteln zu vereinfachen, bei gleichzeitiger Optimierung der Reinigungswirkung.

Die obige Aufgabe wird durch eine Reinigungseinrichtung mit den im Anspruch 1, 15 und 18 angegebenen Merkmalen gelöst. Vorteilhafte Weiterbildungen der Erfindung sind in den abhängigen Ansprüchen definiert.

Eine erfindungsgemäße Reinigungseinrichtung dient zur Reinigung von Flüssigkeiten, insbesondere von Ölflüssigkeiten oder Hydraulikölen. Diese Reinigungseinrichtung umfasst ein Gehäuse, in dem Flüssigkeit enthalten ist oder das von Flüssigkeit durchströmt wird, und zumindest einen Reinigungskörper, der innerhalb des Gehäuses aufgenommen und von der Flüssigkeit beaufschlagbar ist, wobei das Material des Reinigungskörpers derart beschaffen ist, dass darin in der Flüssigkeit enthaltende Verunreinigungen einbring- und aufnehmbar sind. Der Reinigungskörper ist in einem Deckel des Gehäuses oder angrenzend hierzu angebracht ist. Charakteristische Merkmale dieser Reinigungseinrichtung bestehen darin, dass der Reinigungskörper Fasermaterial enthält, dass der Reinigungskörper zumindest eine Oberschicht und eine Bodenschicht aufweist, dass in der Oberschicht Fasern enthalten sind, die an einem äußeren freien Rand der Oberschicht mit ihren jeweiligen freien Enden weg von der Bodenschicht und nach aussen ausgerichtet sind, so dass die Oberschicht des Reinigungskörpers an ihrem äußeren Rand eine offene Oberfläche aufweist, in die hinein Verunreinigungen und/oder Schmutzpartikel einbringbar sind, und dass die Dichte der Bodenschicht größer ist als die Dichte der Oberschicht, wobei der Reinigungskörper mit seiner Bodenschicht an dem Gehäuse oder einem Teil davon angebracht ist und entsprechend die Oberschicht des Reinigungskörpers von der Flüssigkeit beaufschlagbar ist.

Der vorstehend genannten Ausführungsform der Erfindung liegt die wesentliche Erkenntnis zugrunde, dass die Anbringung des Reinigungskörpers in einem Deckel des Gehäuses oder angrenzend hierzu in einfacher und preiswerter Weise möglich ist. Außerdem kann eine solche Anbringung des Reinigungskörpers an einem Deckel oder angrenzend hierzu auch noch nachträglich erfolgen, nämlich an Maschinen oder Geräten, die sich bereits im Einsatz befinden. Des Weiteren ist es hierdurch möglich, dass der Reinigungskörper nach einer längeren Betriebszeit, bei Bedarf, sich mit wenig Aufwand austauschen lässt, weil hierzu lediglich der Deckel vom Gehäuse zu demontieren ist.

Im Sinne der vorliegenden Erfindung ist das Merkmal, wonach der Reinigungskörper von der Flüssigkeit beaufschlagbar ist, dahingehend zu verstehen, dass der Reinigungskörper von der Flüssigkeit angeströmt (nicht: durchströmt) wird. Anders ausgedrückt, kommt es bei einem solchen "Beaufschlagen" des Reinigungskörpers von bzw. mit der Flüssigkeit zu einem Vorbeiströmen der Flüssigkeit an dem Reinigungskörper. Diesbezüglich ist hervorzuheben, dass in dem Reinigungskörper, d.h. innerhalb von dessen Materialstruktur, die Fließgeschwindigkeit auch bei vorbeiströmender Flüssigkeit immer Null ist. Unter Berücksichtigung dessen ist für die vorliegende Erfindung gewährleistet, dass Schmutzpartikel, die in der Flüssigkeit enthalten sein können, sich in der Materialstruktur des Reinigungskörpers verfangen und dann dauerhaft darin verbleiben. Auf diesem Prinzip basiert ein erfindungsgemäßes Reinigen bzw. Filtern von Flüssigkeiten, um darin enthaltene Schmutzpartikel zu entfernen und wie erläutert in der Materialstruktur des Reinigungskörpers zu binden.

Eine weitere erfindungsgemäße Reinigungseinrichtung, die ebenfalls zur Reinigung von Flüssigkeiten, insbesondere von Ölflüssigkeiten oder Hydraulikölen, dient und der eine eigenständige Bedeutung zukommt, umfasst ein Gehäuse mit einer Einlassöffnung und einer Auslassöffnung für die Flüssigkeit, wobei das Gehäuse von der Flüssigkeit von der Einlassöffnung in Richtung der Auslassöffnung durchströmbar ist, und zumindest einen Reinigungskörper, der innerhalb des Gehäuses aufgenommen und von der Flüssigkeit beaufschlagbar ist, wobei das Material des Reinigungskörpers derart beschaffen ist, dass darin in der Flüssigkeit enthaltende Verunreinigungen einbring- und aufnehmbar sind. Bei dieser Reinigungseinrichtung ist vorgesehen, dass in dem Gehäuse mehrere vorzugsweise horizontal verlaufende Ebenen vorgesehen sind, die parallel zueinander angeordnet sein können, wobei an den Ebenen an zumindest einer Seite davon jeweils zumindest ein Reinigungskörper vorzugsweise vollflächig angebracht ist. Hierbei sind die Einlassöffnung an einer Seite des Gehäuses in einem unteren Bereich und die Auslassöffnung an einer entgegengesetzten Seite des Gehäuses in einem oberen Bereich davon ausgebildet. Des Weiteren sind die Ebenen in dem Gehäuse derart nebeneinander angeordnet, dass das Gehäuse von der Flüssigkeit von der Einlassöffnung in Richtung der Auslassöffnung mänderförmig durchströmbar ist. Konkret sind die Ebenen in dem Gehäuse - in vertikaler Richtung gesehen - jeweils übereinander angeordnet sind, so dass das Gehäuse von der Flüssigkeit von der Einlassöffnung zur Auslassöffnung- in vertikaler Richtung gesehen - mäanderförmig durchströmbar ist.

Bei der vorstehend genannten Reinigungseinrichtung besteht ein wesentliches Merkmal der Erfindung darin, dass eine Mehrzahl von Reinigungskörpern innerhalb des Gehäuses jeweils auf mehreren Ebenen angebracht sind, die - in vertikaler Richtung gesehen - jeweils übereinander angeordnet sind. Hierbei sind diese Anordnung der einzelnen Ebenen innerhalb des Gehäuses und die dabei resultierenden Strömungspfade für die Flüssigkeit derart gewählt, dass die Flüssigkeit, nachdem sie in das Gehäuse durch die Einlassöffnung eingetreten ist, dann das Gehäuse in Richtung der Auslassöffnung - in vertikaler Richtung gesehen - mäanderförmig durchströmt und dabei jeweils an den Reinigungskörpern vorbei geführt wird, die wie erläutert auf den einzelnen Ebenen angebracht sind. Im Ergebnis wird hierdurch eine intensive Reinigung der Flüssigkeit innerhalb des Gehäuses erreicht, bei vorteilhaft geringem Gegendruck im Vergleich zu Strömungsfiltern, bei denen eine Durchströmung von der Flüssigkeit vorgesehen ist.

In vorteilhafter Weiterbildung der Erfindung sind bei der vorstehend genannten Ausführungsform der erfindungsgemäßen Reinigungseinrichtung die Ebenen in dem Gehäuse jeweils horizontal und - in vertikaler Richtung gesehen - jeweils übereinander angeordnet. Entsprechend kann die Flüssigkeit, die durch das Gehäuse geleitet wird, das Gehäuse von der Einlassöffnung zur Auslassöffnung - in vertikaler Richtung gesehen - mäanderförmig durchströmen. Hierbei ist es zweckmäßig, wenn auf einer Oberseite der einzelnen Ebenen jeweils ein Reinigungskörper möglichst großflächig angebracht ist. Hierdurch wird ermöglicht, dass ein Ablagern von in der Flüssigkeit enthaltenen Schmutzpartikeln in der Materialstruktur des Reinigungskörpers auch durch Sedimentation in Folge der Schwerkraft eintritt.

Eine weitere erfindungsgemäße Reinigungseinrichtung, die ebenfalls zur Reinigung von Flüssigkeiten, insbesondere von Ölflüssigkeiten oder Hydraulikölen, dient und der eine eigenständige Bedeutung zukommt, umfasst ein Gehäuse mit einer Einlassöffnung und einer Auslassöffnung für die Flüssigkeit, wobei das Gehäuse von der Flüssigkeit von der Einlassöffnung in Richtung der Auslassöffnung durchströmbar ist, und zumindest einen Reinigungskörper, der innerhalb des Gehäuses aufgenommen und von der Flüssigkeit beaufschlagbar ist, wobei das Material des Reinigungskörpers derart beschaffen ist, dass darin in der Flüssigkeit enthaltende Verunreinigungen einbring- und aufnehmbar sind. Bei dieser Reinigungseinrichtung besteht ein charakteristisches Merkmal darin, dass das Gehäuse in Form einer Verbindungsleitung ausgebildet ist, wobei der Reinigungskörper innerhalb der Verbindungsleitung an deren Innenumfangsfläche angebracht ist und wobei der Reinigungskörper Fasermaterial enthält.

Bei der soeben genannten Reinigungseinrichtung besteht ein wesentliches Merkmal der Erfindung darin, dass das Gehäuse in Form einer Verbindungsleitung ausgebildet ist. Hierunter ist eine jedwede Gehäuseform, ungeachtet seiner Materialbeschaffenheit und seiner Formgebung, zu verstehen, mittels der die Flüssigkeit über eine bestimmte Strecke transportiert bzw. geleitet wird.

In vorteilhafter Weiterbildung der zuletzt genannten Ausführungsform für die erfindungsgemäße Reinigungseinrichtung kann vorgesehen sein, dass der Reinigungskörper, der Fasermaterial enthält, innerhalb der Verbindungsleitung entlang von deren gesamter Längserstreckung und/oder insbesondere vollflächig an deren Innenumfangsfläche angebracht ist. Somit ist gewährleistet, dass die Flüssigkeit, währenddessen sie durch die Verbindungsleitung hindurchströmt, fortwährend an dem Reinigungskörper an einer möglichst großen Fläche davon vorbeiströmt, um damit wie vorstehend bereits an anderer Stelle erläutert eine intensive Reinigung der Flüssigkeit von Schmutzpartikeln oder dergleichen zu erreichen.

In vorteilhafter Weiterbildung der Erfindung kann die Verbindungsleitung in Form eines insbesondere flexiblen Schlauchs ausgebildet sein. Ein solcher Schlauch kann aus Kunststoffmaterial hergestellt sein. Alternativ hierzu ist es auch möglich, die Verbindungsleitung aus einem metallischen Werkstoff herzustellen, mit beliebigem Querschnitt.

Die Funktionsweise einer Reinigungseinrichtung gemäß der vorliegenden Erfindung und eines hierzu eingesetzten Reinigungskörpers besteht darin, dass Schmutzpartikel, die in einer Flüssigkeit (insbesondere einer Ölflüssigkeit) enthalten sind, wegen der Schwerkraft nach unten sinken. Falls sich dabei die Flüssigkeit oberhalb des Reinigungskörpers einer erfindungsgemäßen Reinigungseinrichtung befindet, tritt dabei der Effekt auf, dass die Schmutzpartikel in Folge des Absinkens nach unten dann in die Materialstruktur des Reinigungskörpers eintreten und anschließend darin verbleiben. Der gleiche Effekt tritt auch bei einem Vorbeiströmen der Flüssigkeit an dem Reinigungskörper auf, wie es vorstehend bereits an anderer Stelle im Zusammenhang mit den Merkmalen "Beaufschlagen" erläutert worden ist.

Für alle der vorstehend genannten erfindungsgemäßen Reinigungseinrichtungen gilt in gleicher Weise, dass der Reinigungskörper aus porösem Material bestehen kann oder poröses Material aufweisen kann. Falls hierbei der Reinigungskörper Fasermaterial enthält, ist es für diesen Fall zweckmäßig, dass der Reinigungskörper in Form einer Reinigungsmatte mit einer faserigen Beschaffenheit ausgebildet ist.

In vorteilhafter Weiterbildung der Erfindung kann der Reinigungskörper (bzw. die Reinigungsmatte) zumindest eine Bodenschicht und eine Oberschicht aufweist, wobei die Dichte der Bodenschicht größer ist als die Dichte der Oberschicht. Hierbei ist der Reinigungskörper mit seiner Bodenschicht an dem Gehäuse oder einem Teil davon angebracht. In Folge dessen wird dann die Oberschicht des Reinigungskörpers (bzw. der Reinigungsmatte) von der Flüssigkeit beaufschlagt, wobei es zu einem Vorbeiströmen der Flüssigkeit an der Oberschicht kommt.

Die vorstehend genannte Beschaffenheit des Reinigungskörpers mit einer Oberschicht (mit geringerer Dichte) und einer Bodenschicht (mit größerer Dichte) führt zu dem Vorteil, dass in der Flüssigkeit enthaltene Schmutzpartikel zunächst leichter in die Oberschicht eindringen bzw. eintreten können, und dann, wenn sie in Richtung der Bodenschicht "wandern", dort (d.h. im Bereich der Bodenschicht) festgehalten werden, weil hier die Geschwindigkeit de Flüssigkeit Null beträgt bzw. auf Null reduziert ist. Im Ergebnis wird hiermit eine gute Reinigungsintensität mit einfachen und preiswerten Mitteln erreicht.

In Bezug auf die Beschaffenheit des Reinigungskörpers darf an dieser Stelle gesondert darauf hingewiesen werden, dass dieser mit seiner Faserstruktur auch derart ausgebildet sein kann, dass die Dichte in Richtung der Bodenschicht abnimmt. Jedenfalls ist auch bei einer solchen Beschaffenheit des Reinigungskörpers ein dauerhaftes Festhalten bzw. Verbleiben von Schmutzpartikeln innerhalb des Reinigungskörpers bzw. von dessen Faserstruktur dadurch gewährleistet, dass die Geschwindigkeit einer an dem Reinigungskörper vorbeiströmenden Flüssigkeit innerhalb des Reinigungskörpers vermindert wird und insbesondere im Bereich der Bodenschicht oder angrenzend hierzu auf Null reduziert ist. Bei einer solchen Variante des Reinigungskörpers kann von Vorteil sein, dass die Faserstruktur relativ lange Fasern aufweist.

Des Weiteren sieht die vorliegende Erfindung eine Hydraulikleitung vor, die von einer Flüssigkeit, insbesondere von einer Ölflüssigkeit oder von einem Hydrauliköl, durchströmt werden kann. Für diesen Fall ist es zweckmäßig, dass in dieser Hydraulikleitung zumindest eine der vorstehend genannten Reinigungseinrichtungen gemäß der vorliegenden Erfindung eingebunden bzw. integriert ist. In gleicher Weise kann bei einer Realisierung der vorliegenden Erfindung auch in einen Hydraulikkreislauf für eine Maschine, in dem eine Flüssigkeit insbesondere in Form einer Ölflüssigkeit oder eines Hydrauliköls umgewälzt wird, zumindest eine der vorstehend genannten Reinigungseinrichtungen gemäß der vorliegenden Erfindung eingebunden bzw. integriert werden.

Weitere Vorteile, die mit der vorliegenden Erfindung erreicht werden können, bestehen aus folgenden Aspekten bzw. Merkmalen:
- Betrieb einer Maschine mit "dünnerem Öl" (d.h. einer geringeren Viskosität): Hieraus resultiert ein geringerer Widerstand bzw. Energieverbrauch, bei gleicher oder sogar größerer Lebensdauer.
- Lager von Maschinenelementen oder dergleichen können kleiner dimensioniert werden, mit den Vorteilen: weniger bewegte Massen; kleinere Baugrößen insgesamt; Einsparungen in Bezug auf Herstellungs- und Betriebskosten.
- Filterung einer Flüssigkeit in Bezug auf Schmutzpartikel aller möglichen Größen, beispielsweise auch mit einer Größe von nur einigen wenigen µm. Hiermit wird für die Flüssigkeit (z.B. Ölflüssigkeit oder Hydrauliköl) ein sehr hoher Reinheitsgrad erreicht, auch verbunden mit dem Vorteil, dass ein Vorbeiströmen der Flüssigkeit an dem Reinigungskörper keinen Druckabfall (bzw. Gegendruck) verursacht.
- Geringe Herstellungskosten, wenn der Reinigungskörper beispielsweise aus einer Reinigungsmatte (entweder in flacher oder auch runder Formgebung) mit einer faserigen Beschaffenheit besteht.

Nachstehend sind Ausführungsbeispiele der Erfindung anhand einer schematisch vereinfachten Zeichnung im Detail beschrieben.

Es zeigen:
- Fig. 1: eine Querschnittansicht einer Reinigungseinrichtung gemäß einer ersten erfindungsgemäßen Ausführungsform,
- Fig. 2: eine Querschnittansicht einer Reinigungseinrichtung gemäß einer zweiten erfindungsgemäßen Ausführungsform,
- Fig. 3: eine Querschnittansicht einer Reinigungseinrichtung gemäß einer dritten erfindungsgemäßen Ausführungsform,
- Fig. 4: eine Querschnittansicht einer Reinigungseinrichtung gemäß einer vierten erfindungsgemäßen Ausführungsform,
- Fig. 5: eine Querschnittansicht einer Reinigungseinrichtung gemäß einer fünften erfindungsgemäßen Ausführungsform,
- Fig. 6: eine Querschnittansicht einer Reinigungseinrichtung gemäß einer sechsten erfindungsgemäßen Ausführungsform,
- Fig. 7a: eine Querschnittansicht einer Reinigungseinrichtung gemäß einer siebten erfindungsgemäßen Ausführungsform,
- Fig. 7b: eine Perspektivansicht, im Halbschnitt, der Reinigungseinrichtung von Fig. 7a,
- Fig. 8a: eine Draufsicht auf eine Platte mit Aussparungen, die bei der Ausführungsform von Fig. 7a bzw. Fig. 7b eingesetzt wird,
- Fig. 8b: eine Querschnittsansicht durch die Platte entlang der Schnittführung A-A von Fig. 8a,
- Fig. 9a: eine vereinfachte Querschnittsansicht einer Reinigungseinrichtung gemäß einer achten erfindungsgemäßen Ausführungsform,
- Fig. 9b: eine vereinfachte Perspektivansicht der Reinigungseinrichtung von Fig. 9a,
- Fig. 10: eine vereinfachte Querschnittsansicht einer Reinigungseinrichtung gemäß einer neunten erfindungsgemäßen Ausführungsform,
- Fig. 11a-11c: Darstellungen einer weiteren möglichen Formgebung eines Gehäuses der Reinigungseinrichtung gemäß Fig. 19 und dessen Positionierung bzw. Anordnung im Raum,
- Fig. 12a-12d: jeweils schematisch vereinfachte Ansichten einer Hydraulikleitung, in der erfindungsgemäße Reinigungseinrichtungen eingebunden bzw. integriert sind,
- Fig. 13: eine schematisch vereinfachte Ansicht eines Hydraulikkreislaufes, in den erfindungsgemäße Reinigungseinrichtungen eingebunden bzw. integriert sind, und
- Fig. 14: eine schematisch vereinfachte Querschnittsansicht durch einen Reinigungskörper, der Teil einer erfindungsgemäßen Reinigungseinrichtung ist.

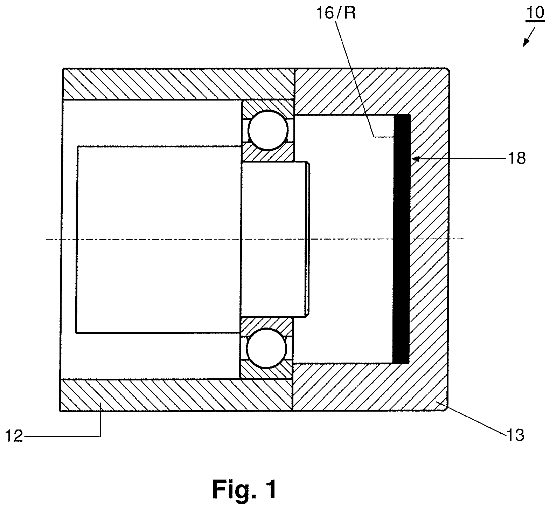

Nachstehend sind unter Bezugnahme auf die Fig. 1-14 bevorzugte Ausführungsformen einer erfindungsgemäßen Reinigungseinrichtung 10 einschließlich zugehöriger Komponenten und von möglichen Anordnungen hiervon dargestellt und erläutert, mit der eine Flüssigkeit, insbesondere in Form einer Ölflüssigkeit oder eines Hydrauliköls, wirkungsvoll und mit einfachen Mitteln von Schmutzpartikeln gereinigt werden kann. Gleiche Merkmale in der Zeichnung sind jeweils mit gleichen Bezugszeichen versehen. An dieser Stelle wird gesondert darauf hingewiesen, dass die Zeichnung lediglich vereinfacht und insbesondere ohne Maßstab dargestellt ist.

In allen der nachstehend noch erläuterten Ausführungsformen umfasst die Reinigungseinrichtung 10 ein Gehäuse 12, das verschiedene Formen aufweisen kann. Jedenfalls ist in dem Gehäuse eine Flüssigkeit enthalten, für die mit Hilfe der vorliegenden Erfindung eine Reinigung in Bezug auf Schmutzpartikel oder dergleichen erreicht werden soll.

Für die nachfolgende Beschreibung der Erfindung wird die Flüssigkeit stets als "Ölflüssigkeit" bezeichnet, ohne dass dies beschränkend zu verstehen ist.

In den Fig. 1-7 ist eine erfindungsgemäße Reinigungseinrichtung 10 gemäß einer ersten bis siebten Ausführungsform gezeigt. Diesen Ausführungsformen ist jeweils gemeinsam, dass die Reinigungseinrichtung 10 ein Gehäuse 12 umfasst, an dem seitlich ein Deckel 13 angebracht ist. In dem Deckel 13 oder angrenzend hierzu ist ein Reinigungskörper 16 angebracht. In den Fig. 1-6 ist jeweils ein vereinfachter Querschnitt durch das Gehäuse 12 entlang von dessen Längsrichtung gezeigt. Zu diesen Ausführungsformen nun im Einzelnen folgende Erläuterungen:
Fig. 1 zeigt von der ersten Ausführungsform der Reinigungseinrichtung 10 eine vereinfachte Querschnittsansicht.

In dem Gehäuse 12 kann mittels einer Lagereinrichtung eine nicht näher bezeichnete Welle gelagert sein.

Angrenzend zu der genannten Lagereinrichtung ist an dem Gehäuse 12 ein Deckel 13 befestigt. Dieser Deckel 13 ist becherförmig ausgebildet und umfasst somit eine stirnseitige Innenfläche 18.

Die Reinigungseinrichtung 10 umfasst zumindest einen Reinigungskörper 16, der innerhalb des Gehäuses 12 aufgenommen ist. Dieser Reinigungskörper 16 kann von der Ölflüssigkeit beaufschlagt werden - konkret kann dies bedeuten, dass die Ölflüssigkeit innerhalb des Gehäuses 12, wenn daran der Deckel 13 montiert bzw. befestigt ist, an dem Reinigungskörper 16 vorbeiströmt.

Bei der ersten Ausführungsform der Reinigungseinrichtung 10 ist der Reinigungskörper 16 an der stirnseitigen Innenfläche 18 des Deckels 13 befestigt. Falls der Deckel 13 - ausweislich der Darstellung von Fig. 1 - an dem Gehäuse 12 befestigt ist, befindet sich somit der Reinigungskörper 16 im Innenraum des Gehäuses 12 und kann in Kontakt mit der darin enthaltenen Ölflüssigkeit gelangen bzw. von dieser beaufschlagt werden.

Der Reinigungskörper 16 ist zweckmäßigerweise als Reinigungsmatte mit einer faserigen Beschaffenheit ausgebildet. Vorzugsweise ist bei der ersten Ausführungsform die Flächenform der Reinigungsmatte, die hier auch mit "R" bezeichnet ist, an die stirnseitige Innenfläche 18 des Deckels 13 angepasst. Anders ausgedrückt, wird die Innenfläche 18 des Deckels 13 vollständig von der Reinigungsmatte R abgedeckt.

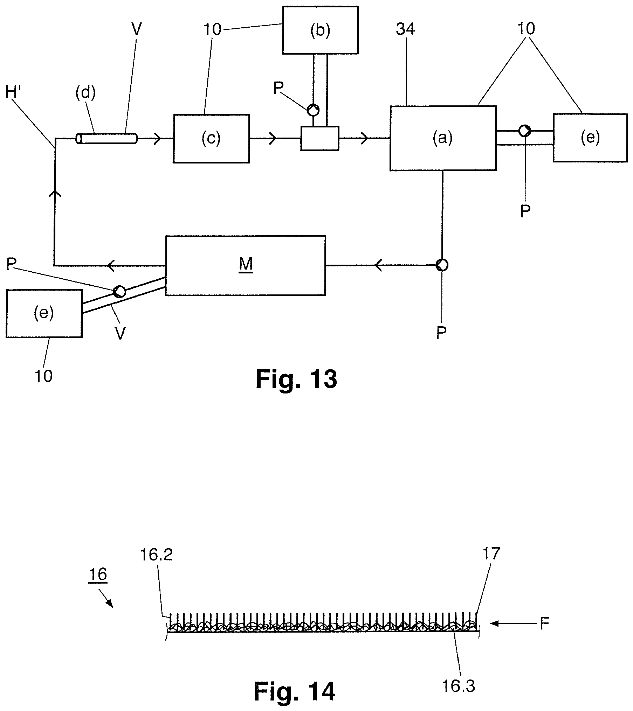

Fig. 14 veranschaulicht in einer Querschnittsansicht eine mögliche Ausgestaltung des Reinigungskörpers 16, der wie erläutert als Reinigungsmatte R ausgebildet sein kann. Jedenfalls sind für einen solchen Reinigungskörper 16 (bzw. die Reinigungsmatte R) eine Oberschicht 16.2 und eine Bodenschicht 16.3 vorgesehen, wobei diese Schichten jeweils Fasermaterial F enthalten. Für die vorliegende Erfindung ist in diesem Zusammenhang von Vorteil, dass eine Dichte der Bodenschicht 16.3 größer ist als eine Dichte der Oberschicht 16.2. Bei einer solchen Ausgestaltung des Reinigungskörpers 16 bzw. der Reinigungsmatte R kann vorgesehen sein, dass in der Bodenschicht 16.3 ein schlingenförmiges Fasermaterial F enthalten ist, wohingegen in der Oberschicht 16.2 lediglich einzelne Fasern 17 enthalten sind, die an einem äußeren freien Rand der Oberschicht 16.2 mit ihren jeweiligen freien Enden weg von der Bodenschicht 16.3 und nach außen gerichtet sind.

Mit der vorstehend erläuterten Beschaffenheit des Reinigungskörpers 16 (bzw. der Reinigungsmatte R) wird erreicht, dass an einem äußeren Rand der Oberschicht 16.2 eine offene Oberfläche vorliegt, die ein Eintreten bzw. Eindringen von Schmutzpartikeln möglich macht. Demgegenüber wird durch die vergleichsweise größere Dichte der Bodenschicht 16.3 die Wirkung erreicht, dass Schmutzpartikel, nachdem sie einmal in die Oberschicht 16.2 eingetreten sind und in Richtung der Bodenschicht 16.3 "gewandert" sind, dann in der Bodenschicht 16.3 verbleiben und dort dauerhaft festgehalten werden.

Falls die Ölflüssigkeit, welche sich im Innenraum des Gehäuses 12 befindet, in Kontakt mit der Reinigungsmatte R gelangt bzw. diese beaufschlagt, ist durch die faserige Beschaffenheit dieser Reinigungsmatte R gewährleistet, dass in der Ölflüssigkeit enthaltene Schmutzpartikel - wie soeben erläutert - in die Oberschicht 16.2 der Reinigungsmatte R eindringen können und anschließend, wenn sie sich innerhalb der Reinigungsmatte R weiter in Richtung der Bodenschicht 16.3 bewegt haben, dann von der Bodenschicht 16.3 dort festgehalten werden. Wie vorstehend an anderer Stelle bereits erläutert, beruht das Festhalten bzw. Verbleiben der Schmutzpartikel innerhalb der Reinigungsmatte R bzw. deren Bodenschicht 16.3 darauf, dass dort die Geschwindigkeit der Ölflüssigkeit Null beträgt. Konkret bedeutet dies, dass Schmutzpartikel, nachdem sie einmal in die Reinigungsmatte R eingetreten sind und in die Bodenschicht 16.3 gelangt sind, dort dann "für immer" verbleiben.

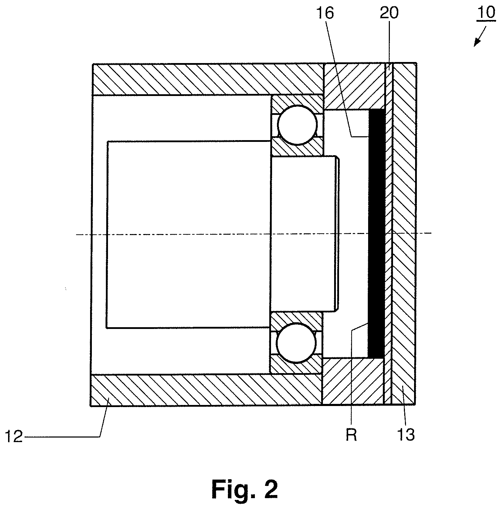

Fig. 2 zeigt die erfindungsgemäße Reinigungseinrichtung 10 gemäß einer zweiten Ausführungsform. Das Gehäuse 12 als solches ist in gleicher Weise wie bei der ersten Ausführungsform ausgebildet. Gleiches gilt auch für die Beschaffenheit der Reinigungsmatte R, so dass zur Vermeidung von Wiederholungen auf die Erläuterungen zur ersten Ausführungsform verwiesen werden darf.

Die zweite Ausführungsform unterscheidet sich von der ersten Ausführungsform einzig in der Art der Befestigung der Reinigungsmatte R. Konkret ist hier die Reinigungsmatte auf bzw. an einer Trägerplatte 20 befestigt. Die Positionierung der Reinigungsmatte R innerhalb des Gehäuses 12 erfolgt dann derart, dass die Trägerplatte 20 über einen zweigeteilten Deckel 13 an dem Gehäuse 12 befestigt wird und dabei die Reinigungsmatte R dem Innenraum des Gehäuses 12 zugewandt ist.

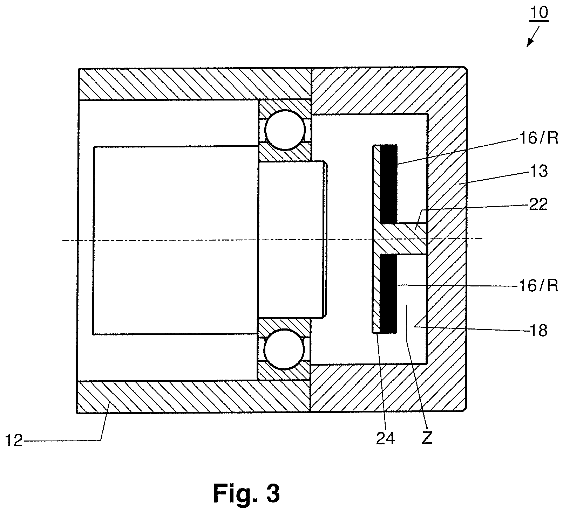

Bei der dritten Ausführungsform der erfindungsgemäßen Reinigungseinrichtung 10, ausweislich der Darstellung gemäß Fig. 3, ist an der stirnseitigen Innenfläche 18 des Deckels 13 eine Trägerkonstruktion 22 befestigt, an der ein flächiges Halteelement 24 angebunden ist. Im einfachsten Fall sind das Halteelement 24 und die Trägerkonstruktion 22 einstückig ausgebildet. Jedenfalls ist das flächige Halteelement 22 mit der Trägerkonstruktion 22 derart verbunden, dass seine Flächenerstreckung parallel zur stirnseitigen Innenfläche 18 des Deckels 13 verläuft.

Bei der dritten Ausführungsform ist der Reinigungskörper 16 in Form einer Reinigungsmatte R lediglich an einer Seite des Halteelements 24 angebracht, nämlich an der Seite, die der stirnseitigen Innenfläche 18 des Deckels 13 direkt gegenüberliegt. Hierdurch wird erreicht, dass die offene Oberfläche der Oberschicht 16.2 (vgl. Fig. 14) der Reinigungsmatte R lediglich der Innenfläche 18 zugewandt ist und somit von in Bewegung befindlichen Teilen, die im Innenraum des Gehäuses 12 enthalten sein können, weg zeigt. Im Ergebnis findet somit ein Vorbeiströmen der Ölflüssigkeit an der Reinigungsmatte R lediglich in dem Zwischenraum Z statt, der einerseits von dem Halteelement 24 und andererseits von der stirnseitigen Innenfläche 18 des Deckels 13 begrenzt ist. Hierbei sind die Abmessungen bzw. der Durchmesser des Halteelements 24 im Vergleich zum Innendurchmesser des Deckels 13 ausreichend klein bemessen, so dass die Ölflüssigkeit das Halteelement 24 hinterströmen und damit in den Zwischenraum Z eintreten kann, um anschließend an der Reinigungsmatte R beruhigt, d.h. mit ausreichend kleiner Geschwindigkeit vorbeizuströmen.

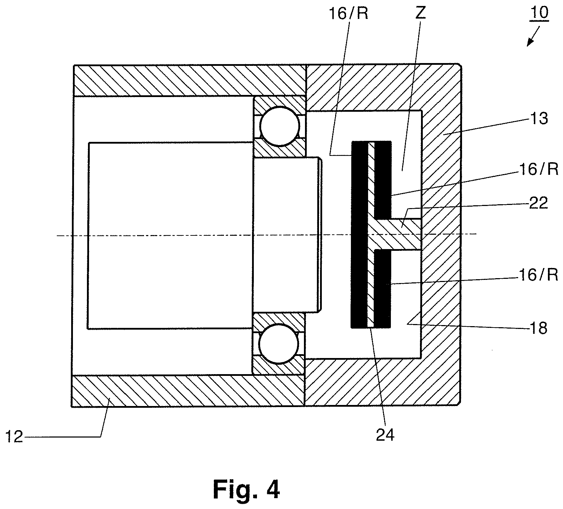

Die vierte Ausführungsform der erfindungsgemäßen Reinigungseinrichtung 10 gemäß Fig. 4 entspricht im Wesentlichen der dritten Ausführungsform, mit dem einzigen Unterschied, dass nun die Reinigungsmatte R an beiden Seiten des Halteelements 24 angebracht ist.

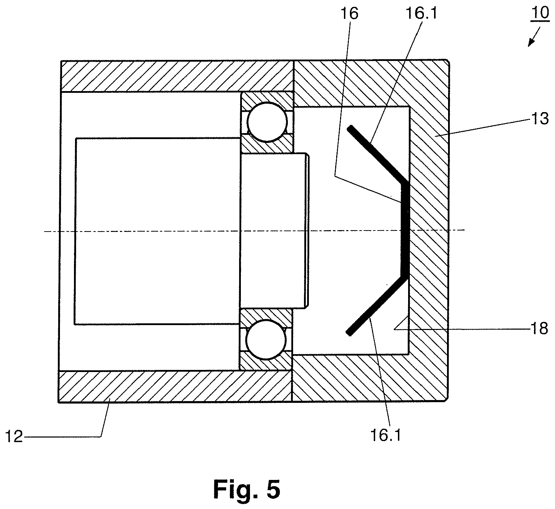

Bei der fünften Ausführungsform der erfindungsgemäßen Reinigungseinrichtung 10 gemäß Fig. 5 ist vorgesehen, dass ein mittiger Bereich des Reinigungskörpers 16 an der stirnseitigen Innenfläche 18 des Deckels 13 befestigt ist, wobei ein randseitiger Abschnitt 16.1 des Reinigungskörpers 16 von der Innenfläche 18 des Deckels abragt. Hierbei versteht sich, dass der Reinigungskörper 16 ebenfalls in Form einer Reinigungsmatte R (vgl. Fig. 14) ausgebildet sein kann. Zur Vermeidung von Wiederholungen darf auf die vorstehenden Erläuterungen zur Beschaffenheit einer solchen Reinigungsmatte R verwiesen werden.

In Bezug auf die fünfte Ausführungsform wird darauf hingewiesen, dass durch den abragenden Abschnitt 16.1 des Reinigungskörpers 16 (bzw. der Reinigungsmatte R) in Wechselwirkung mit den angrenzenden Wandabschnitten des Deckels 13 Kammern entstehen, in die hinein die Ölflüssigkeit gelangen bzw. strömen kann. Hierbei ist die Reinigungsmatte R derart ausgebildet, dass deren Fasern F zumindest im Bereich des abragenden Abschnitts 16.1 an allen Seiten senkrecht von der Oberfläche weg ausgerichtet sind, so wie es in Fig. 14 für die Oberschicht 16.2 und deren einzelne Fasern 17 gezeigt ist.

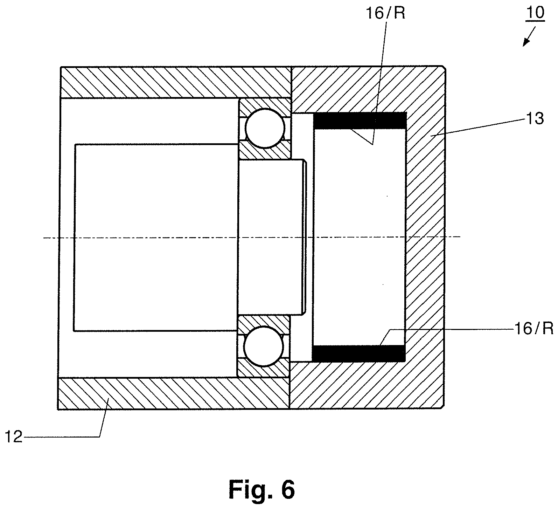

Bei der sechsten Ausführungsform der erfindungsgemäßen Reinigungseinrichtung 10 gemäß Fig. 6 ist vorgesehen, dass die Reinigungsmatte R an der Innenumfangsfläche des becherförmigen Deckels 13 angebracht ist. Hierbei ist es zweckmäßig, dass die Reinigungsmatte R die Innenumfangsfläche des Deckels 13 vollständig bedeckt, so dass damit eine möglichst große Wirkfläche für die Reinigungsmatte R erreicht wird, mit der die Ölflüssigkeit beim Vorbeiströmen in Wechselwirkung treten kann.

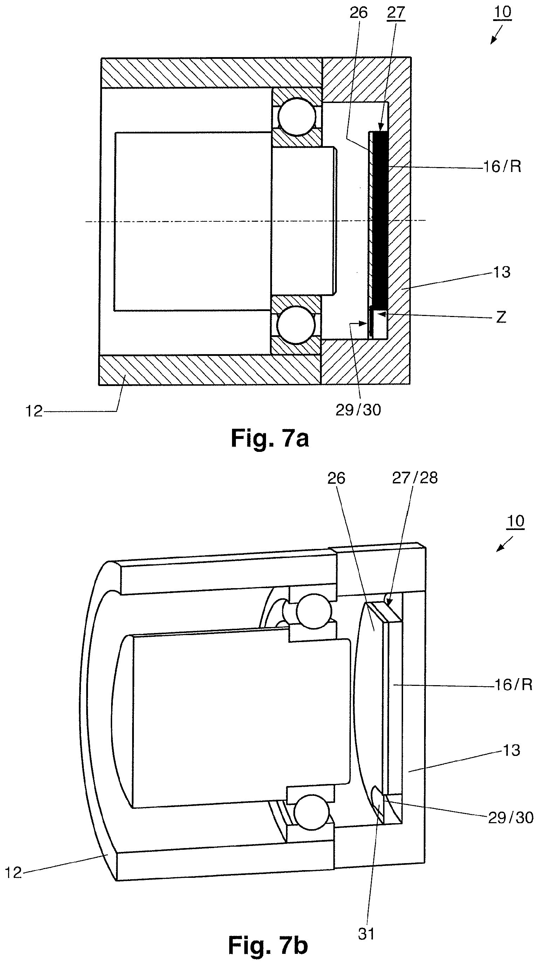

Eine siebte Ausführungsform der erfindungsgemäßen Reinigungseinrichtung 10 ist in Fig. 7a und Fig. 7b gezeigt. Hierbei zeigt Fig. 7a einen vereinfachten Querschnitt durch das Gehäuse 12 entlang von dessen Längsrichtung, wobei die Fig. 7b von diesem Querschnitt jeweils eine Perspektivansicht zeigen.

Bei der siebten Ausführungsform der erfindungsgemäßen Reinigungseinrichtung 10 gemäß Fig. 7a bzw. Fig. 7b ist vorgesehen, dass an der Innenumfangsfläche des Deckels 13 zumindest eine Platte 26 insbesondere in Form einer kreisförmigen Scheibe angebracht ist, die parallel zur stirnseitigen Innenfläche 18 des Deckels 13 und beabstandet hierzu angeordnet ist. Hierbei ist der Reinigungskörper 16, vorzugsweise in Form einer Reinigungsmatte R (vgl. Fig. 14), an einer der stirnseitigen Innenfläche des Deckels zugewandten Rückseite der Platte 26 angebracht. Für die Platte 26 ist an oder in deren oberem Bereich eine Eintrittsöffnung 27 vorgesehen. In gleicher Weise ist für die Platte 26 an oder in deren unterem Bereich eine Austrittsöffnung 29 (vgl. Fig. 7a) für die Flüssigkeit vorgesehen.

Die Beabstandung der Platte 26 von der stirnseitigen Innenfläche 18 des Deckels 13 ist derart gewählt, dass zwischen der Platte 26 und der Innenfläche 18 ein Zwischenraum Z gebildet wird. Somit ist die Reinigungsmatte R derart an der Rückseite der Platte 26 angebracht, dass sie in diesem Zwischenraum Z aufgenommen ist.

Die Anbringung einer Reinigungsmatte R an der Rückseite der Platte 26 kann in der Weise erfolgen, dass die Fasern 17, welche an einem äußeren Rand von der Oberschicht 16.2 der Reinigungsmatte R nach aussen gerichtet sind, soweit an die Innenfläche 18 des Deckels heranreichen, dass sie diese Innenfläche 18 berühren.

Bei der vorstehend genannten siebten Ausführungsform ist die Eintrittsöffnung 27 durch eine Abflachung der Platte 26 ausgebildet. Hierdurch ist es möglich, dass Ölflüssigkeit durch die Eintrittsöffnung 27 hindurchströmt und in dieser Weise in den Zwischenraum Z eintritt, um dort gezielt an der Reinigungsmatte R in Richtung nach unten vorbeizuströmen.

Die Austrittsöffnung 29 ist durch eine Aussparung 30 gebildet ist, die in der scheibenförmigen Platte 26 ausgebildet ist. In Folge dessen ist es möglich, dass Ölflüssigkeit, aus dem zwischen der Rückseite der Platte 26 und der stirnseitigen Innenfläche 18 des Deckels 13 begrenzten Zwischenraum Z durch die Aussparung 30 zurück in einen Innenraum des Gehäuses 12 strömen kann, an den die Vorderseite der Platte 26 angrenzt.

Um zu vermeiden, dass einzelne Fasern 17, die sich ggf. von der Oberschicht 16.2 der Reinigungsmatte R herausgelöst haben, durch die Austrittsöffnung 29 in den Innenraum des Gehäuses 12 hineingelangen, kann bei der siebten Ausführungsform vorgesehen sein, dass in der Aussparung 30 ein feinmaschiges Gitterelement 31 aufgenommen ist. Mit Hilfe eines solchen Gitterelements 31 kann ein Hindurchtreten von einzelnen Fasern 17 durch die Austrittsöffnung 29 unterbunden werden.

Die Fixierung des Gitterelements 31 im Bereich der Austrittsöffnung 29 kann für die siebte Ausführungsform der erfindungsgemäßen Reinigungseinrichtung 10 in einfacher Weise dadurch erreicht werden, dass an der Innenumfangsfläche des Deckels 13 parallel zueinander zwei Platten 26 angebracht sind, die parallel zur stirnseitigen Innenfläche 18 des Deckels 13 und beabstandet hierzu angeordnet ist. Zwischen diesen beiden Platten 26 ist dann das feinmaschige Gitterelement 31 angeordnet und wird somit in den jeweiligen Aussparungen 30 der Platten 26 gehalten.

Im Betrieb einer Reinigungseinrichtung 10 gemäß der siebten Ausführungsform gemäß Fig. 7a erfolgt eine Reinigung für die Ölflüssigkeit wie folgt: Im Innenraum des Gehäuses 12 rund um das darin enthaltene Lagerelement, welches angrenzend zur Vorderseite der Platte 26 angeordnet ist, entstehen unzählige Öltröpfchen. Ein Teil dieser Öltröpfchen gelangt dann regelmäßig und immer wieder durch die Eintrittsöffnung 27 hinein in den Zwischenraum Z, d.h. hinein in den Bereich zwischen der Rückseite der Platte 26 und der stirnseitigen Innenfläche 18 des Deckels 13, wo sich die Reinigungsmatte R befindet. In Folge der Schwerkraft können die Öltröpfchen, nachdem sie durch die Eintrittsöffnung 27 in den besagten Zwischenraum Z eingetreten sind, sich nur nach unten bewegen und fließen dabei langsam an den unzähligen Fasern 17 vorbei, die sich an der Außenseite der Oberschicht 16.2 der Reinigungsmatte R befinden. Hierbei wird durch die Faserstruktur der Reinigungsmatte R erreicht, dass die Öltröpfchen durch die Fasern 17 auch immer wieder bis auf den Grund der Reinigungsmatte, d.h. hinein in deren Bodenschicht 16.3 geführt werden. Somit ist gewährleistet, dass Schmutzpartikel, die in den Öltröpfchen der Ölflüssigkeit enthalten sind, mit der Zeit kontinuierlich an den Fasern bzw. in der Bodenschicht 16.3 der Reinigungsmatte R gebunden werden.

Das gereinigte Öl kann dann im unteren Bereich des Zwischenraums Z wie erläutert durch das Gitterelement 31, welches in der Aussparung 30 aufgenommen ist, wieder zurück in den Innenraum des Gehäuses 12 strömen.

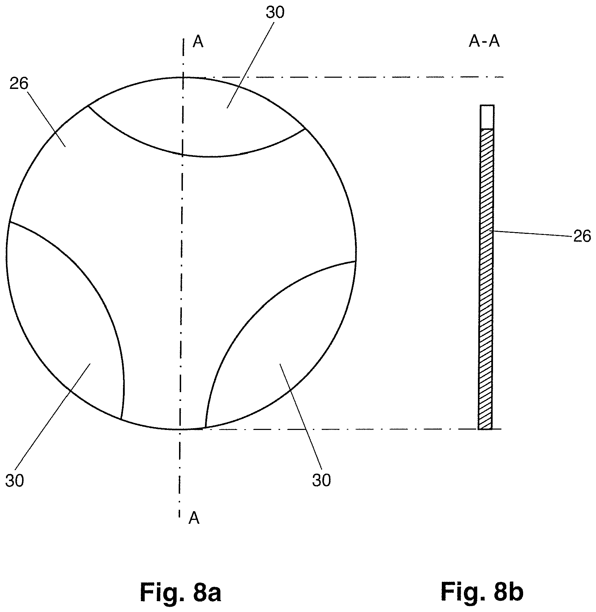

Fig. 8a zeigt eine Draufsicht auf eine Platte 26, die bei einer Modifikation bzw. Vereinfachung der siebten Ausführungsform der erfindungsgemäßen Reinigungseinrichtung 10 eingesetzt werden kann. An der Platte 26 gemäß Fig. 8a kann, in gleicher Weise wie im Zusammenhang mit der Fig. 7a erläutert, an einer Seite davon eine Reinigungsmatte R angebracht sein.

Die Platte 26 gemäß Fig. 8a stellt eine Vereinfachung dar, indem entlang ihres Außenumfangs zumindest drei Aussparungen 30 ausgebildet sind. Diese Aussparungen 30 haben relativ zueinander jeweils einen gleichen Abstand und sind insoweit gleichmäßig entlang des Außenumfangs der Platte 26 verteilt. Alternativ zu der in Fig. 8a gezeigten Abbildungen mit drei Aussparungen 30 kann auch vorgesehen sein, dass entlang des Außenumfangs der Platte 26 fünf Aussparungen 30 ausgebildet sind. Eine Kreisform für die Platte 26 ist hierbei nicht erforderlich, so dass die Platte 26 in Bezug auf ihren Aussenumfang auch eine von der Kreisform abweichende Geometrie aufweisen kann.

Jedenfalls ist für der vorstehend genannten Modifikation für die Platte 26 gemäß Fig. 8a - in Anbetracht der ungeraden Zahl der Aussparungen 30 (wie gezeigt: drei Aussparungen 30; oder alternativ hierzu, nicht gezeigt: auch fünf Aussparungen 30 möglich) - gewährleistet, dass es oben und unten an der Platte 26 jeweils zu einem Eintritt und Austritt von Ölflüssigkeit in den bzw. aus dem Zwischenraum Z kommt, nämlich ungeachtet einer konkreten Positionierung der Platte 26. Insoweit vereinfacht sich dadurch eine Montage der Platte 26, weil es in Anbetracht der ungeraden Anzahl von Aussparungen stets ein "oben" und ein "unten" gibt. Hierbei kann zur weiteren Vereinfachung vorgesehen sein, dass das feinmaschiges Gitterelement 31 (vgl. Fig. 7b) weggelassen wird.

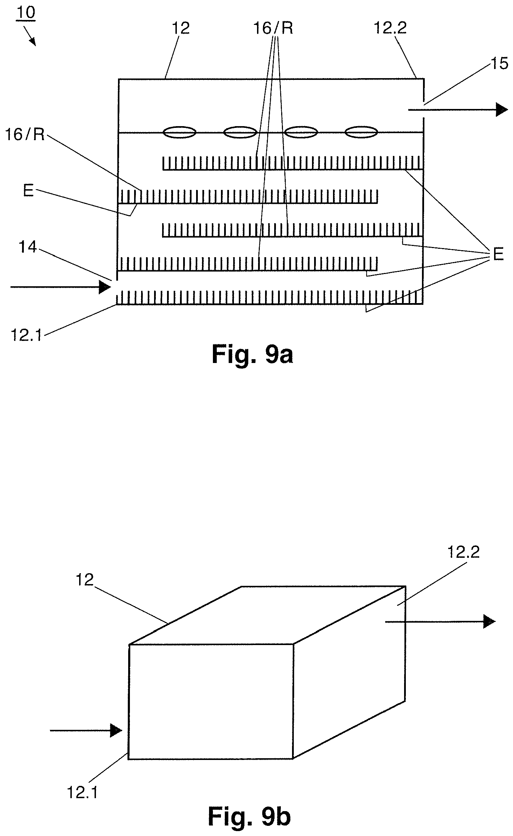

In den Fig. 9a und Fig. 9b ist eine achte Ausführungsform für die erfindungsgemäße Reinigungseinrichtung 10 gezeigt, nämlich sowohl in einer Querschnittsansicht (Fig. 9a) als auch in einer perspektivischen Ansicht von außen (Fig. 9b). Bei dieser achten Ausführungsform umfasst die Reinigungseinrichtung 10 ein Gehäuse 12 mit einer Einlassöffnung 14 und einer Auslassöffnung 15 für die Ölflüssigkeit.

Konkret ist bei der achten Ausführungsform die Einlassöffnung 14 für die Ölflüssigkeit in einem unteren Bereich 12.1 des Gehäuses 12 beispielsweise an einer rechten Seite davon vorgesehen, wobei die Auslassöffnung 15 an einer entgegengesetzten Seite des Gehäuses 12 in einem oberen Bereich 12.2 davon beispielsweise an einer linken Seite vorgesehen ist. Durch diese Anordnung sowohl der Einlassöffnung 14 als auch der Auslassöffnung 15 ist gewährleistet, dass die Ölflüssigkeit, nachdem sie durch die Einlassöffnung 14 in den Innenraum des Gehäuses 12 eingetreten ist, diagonal nach schräg oben durch das Gehäuse 12 strömen muss, um zur Auslassöffnung 15 zu gelangen.

Bei der achten Ausführungsform sind ausweislich der Darstellung von Fig. 9a innerhalb des Gehäuses 12 mehrere Ebenen E vorgesehen bzw. eingebracht. Im Hinblick auf eine optimale Raumausnutzung innerhalb des Gehäuses 12 ist es von Vorteil, dass diese Ebenen - in vertikaler Richtung gesehen - jeweils übereinander und parallel zueinander angeordnet sein können. Angrenzend zu den Seitenwänden des Gehäuses weisen diese Ebenen E alternierend an einem vorderen Ende bzw. hinteren Ende davon jeweils eine Ausnehmung bzw. eine Öffnung auf, durch die hindurch die Ölflüssigkeit in Richtung nach oben weiter strömen kann, wenn sie das Ende einer jeweiligen Ebene E erreicht hat.

Auf einer Oberseite der einzelnen horizontalen Ebenen E ist jeweils ein Reinigungskörper 16 angebracht, vorzugsweise in Form einer großflächigen Reinigungsmatte R.

Im Betrieb einer Reinigungseinrichtung 10 gemäß der achten Ausführungsform erfolgt eine Reinigung für die Ölflüssigkeit in der Weise, dass sie zunächst durch die Einlassöffnung 14 in das Gehäuse 12 eingeleitet wird. Im Anschluss daran strömt die Ölflüssigkeit über die einzelnen Ebenen E und dabei - in vertikaler Richtung gesehen - durch das Gehäuse 12 hindurch mäanderförmig nach oben, bis sie durch die Austrittsöffnung 15 hindurch wieder aus dem Gehäuse 12 heraus gelangt.

Die Ausgestaltung des Gehäuses 12 bei der achten Ausführungsform und der einzelnen Ebenen E führt zu dem Vorteil, dass für die Reinigungsmatten R, die auf den jeweiligen Oberseiten der einzelnen Ebenen E angebracht sind, in Summe eine sehr große Wirkfläche erreicht wird. Ein weiterer Vorteil hierbei besteht darin, dass der mäanderförmige Verlauf der Strömung der Ölflüssigkeit durch das Gehäuse 12 hindurch nach oben die Fließgeschwindigkeit der Ölflüssigkeit herabsetzt und dadurch die Strömung für die Ölflüssigkeit beruhigt wird. Dies begünstigt neben der großen Wirkfläche der Reinigungsmatten R zusätzlich die Wahrscheinlichkeit, dass in der Ölflüssigkeit enthaltene Schmutzpartikel absinken bzw. bei einem Vorbeiströmen an den Reinigungsmatten R sich in der Faserstruktur der Reinigungsmatten R verfangen können und dort, wie erläutert, dann dauerhaft verbleiben.

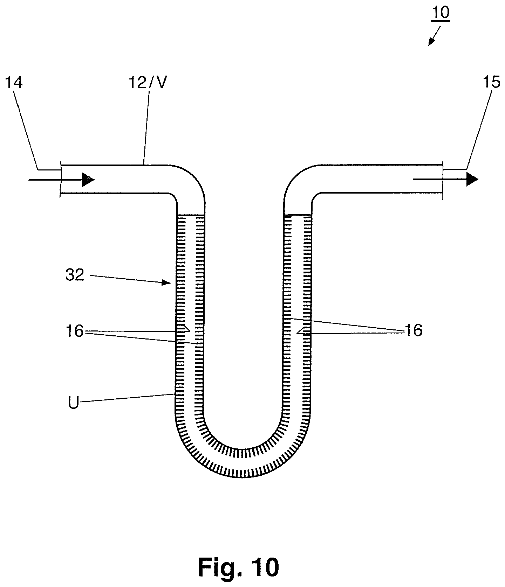

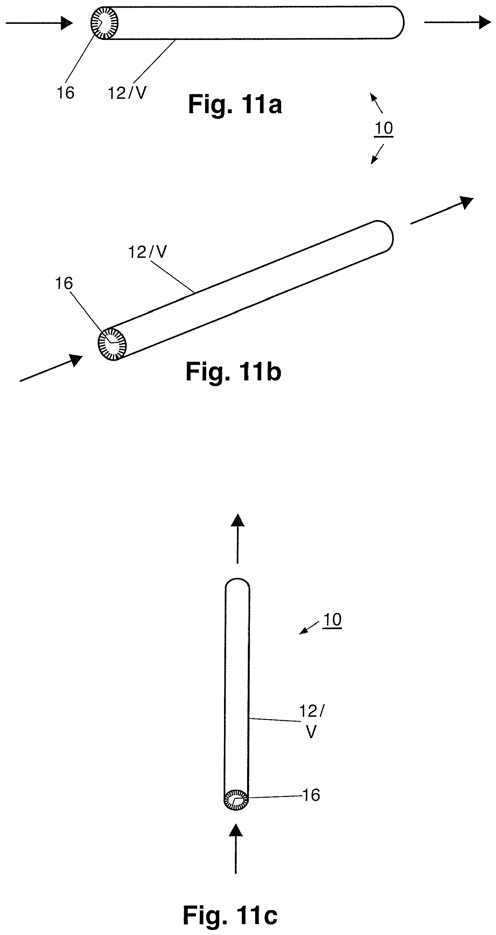

In Fig. 10 und Fig. 11 ist eine neunte Ausführungsform für die erfindungsgemäße Reinigungseinrichtung 10 gezeigt, bei der das Gehäuse 12 in Form einer Verbindungsleitung V ausgebildet ist. Ungeachtet der konkreten Formgebung dieser Verbindungsleitung V ist zu verstehen, dass ein Reinigungskörper 16, vorzugsweise mit einer faserigen Beschaffenheit, an einer Innenumfangsfläche dieser Verbindungsleitung V angebracht bzw. ausgebildet ist. Des Weiteren ist es zweckmäßig, dass der Reinigungskörper 16 innerhalb der Verbindungsleitung V entlang von deren gesamter Längserstreckung vorgesehen ist.

Bei der Ausführungsform von Fig. 10 weist die Verbindungsleitung V einen U-förmigen Abschnitt 32 auf, wobei der Reinigungskörper 16 an der Innenumfangsfläche entlang dieses Abschnitts 32 vorgesehen ist.

Für einen Eintritt und Austritt von Ölflüssigkeit ist die Verbindungsleitung mit einer Einlassöffnung 14 und einer Auslassöffnung 15 versehen, so dass damit ein Durchströmen der Verbindungsleitung V mit Ölflüssigkeit gewährleistet ist.

In den Darstellungen von Fig. 11 hat die Verbindungsleitung V jeweils einen geraden Verlauf. Die einzelnen Darstellungen von Fig. 11 unterscheiden sich dadurch, dass die Verbindungsleitung V horizontal (vgl. Fig. 11a), schräg (vgl. Fig. 11b) oder senkrecht (vgl. Fig. 11c) im Raum angeordnet sein kann.

In Bezug auf die vorstehend genannte neunte Ausführungsform der erfindungsgemäßen Reinigungseinrichtung 10 wird hervorgehoben, dass deren Gehäuse 12 bzw. Verbindungsleitung V mit einem beliebigen Querschnitt und insbesondere aus Kunststoff hergestellt sein kann.

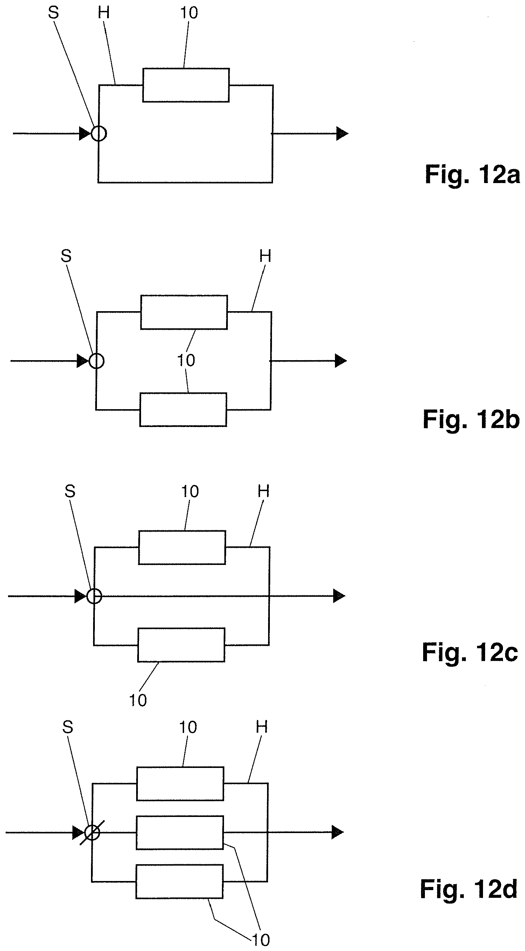

In den einzelnen Darstellungen von Fig. 12a-12d sind verschiedene Konfigurationen für eine Hydraulikleitung H gezeigt, in welche zumindest eine Reinigungseinrichtung 10 gemäß der vorstehend genannten Ausführungsformen eingebunden bzw. integriert ist. Hierbei ist die Strömungsrichtung für die Ölflüssigkeit jeweils durch Pfeile angedeutet. Bei allen dieser möglichen Konfigurationen gemäß der Fig. 12a-12d kann vorgesehen sein, dass stromaufwärts einer Reinigungseinrichtung 10 (bzw. der Reinigungseinrichtungen 10) ein Schaltventil S vorgesehen ist, mit dem die Ölflüssigkeit durch zumindest einen bestimmten Zweig der Hydraulikleitung H geleitet werden kann. Hierbei ist es mithilfe des Schaltventils S auch möglich, dass ein bestimmter Zweig der Hydraulikleitung H temporär nicht weiter von der Ölflüssigkeit geströmt wird, so dass die Ölflüssigkeit, die sich bereits in diesem dann "stillgelegten" Zweig befindet, sich beruhigen kann. Hierdurch wird eine Sedimentation von Schmutzpartikel in Richtung nach unten hinein in die Faserstruktur der Reinigungsmatte R gefördert.

In Bezug auf die einzelnen Konfigurationen für eine Hydraulikleitung H gemäß der Fig. 12a-12d wird an dieser Stelle gesondert darauf hingewiesen, dass diese gemäß einer weiteren Ausführungsform der erfindungsgemäßen Reinigungseinrichtung 10 auch in einem Gehäuse zusammengefasst sein können, nämlich in einer beliebigen Kombination der Konfigurationen nach den Fig. Fig. 12a-12d.

In der Fig. 13 ist ein Hydraulikkreislauf H' für eine Maschine M vereinfacht dargestellt, in dem eine Ölflüssigkeit - ausweislich der jeweils gezeigten Pfeilrichtungen - umgewälzt wird.

Der Hydraulikkreislauf H' umfasst ein Reservoir für die Ölflüssigkeit, das in Fig. 13 mit "34" bezeichnet ist.

In den Hydraulikkreislauf H' können erfindungsgemäß eine oder mehrere Reinigungseinrichtungen 10 gemäß der vorstehend genannten Ausführungsformen eingebunden bzw. integriert sein. Dies sei durch folgende Buchstaben-Nomenklatur erläutert:
- (a): Das Reservoir 34 für die Ölflüssigkeit kann durch eine erfindungsgemäße Reinigungseinrichtung 10 ersetzt werden.
- (b): Eine erfindungsgemäße Reinigungseinrichtung 10 kann an den Hydraulikkreislauf H' im Nebenstrom angeschlossen sein, vorzugsweise mit eigener Pumpe P.
- (c): Stromaufwärts des Reservoirs 34 ist eine erfindungsgemäße Reinigungseinrichtung 10 in den Kreislauf eingebunden.
- (d): In die Leitung des Hydraulikkreislaufs ist eine erfindungsgemäße Reinigungseinrichtung gemäß der neunten Ausführungsform (vgl. Fig. 10, Fig. 11) integriert.
- (e): An das Ölreservoir der Maschine M und/oder an das Reservoir 34 ist unmittelbar eine erfindungsgemäße Reinigungseinrichtung 10 angeschlossen, vorzugsweise mit eigener Pumpe P.

In Bezug auf die vorstehend genannten Möglichkeiten gemäß der Buchstaben (a) - (e), nach denen erfindungsgemäß die Einbindung einer Reinigungseinrichtung 10 in einen Hydraulikkreislauf H' möglich ist, versteht sich, dass diese Varianten gemäß der Buchstaben (a) bis (e) auch eine Kombination in beliebiger Form möglich ist.

An dieser Stelle wird gesondert darauf hingewiesen, dass mit der erfindungsgemäßen Reinigungseinrichtung bzw. -matte auch ein Entgasen der Flüssigkeit möglich ist, indem es an dem zugehörigen Fasermaterial der Reinigungsmatte auch zu einem Anhaften von in der Flüssigkeit enthaltenen Gas- oder Luftbläschen kommt.

Schließlich darf für alle der vorstehend genannten Ausführungsformen der vorliegenden Erfindung nochmals darauf hingewiesen werden, dass für die Funktionsweise des Reinigungskörpers 16 bzw. der Reinigungsmatte R folgende Aspekte von Bedeutung sind:
- Sedimentation in Folge der Schwerkraft;
- Abbremsung (d.h. Verringerung der Strömungsgeschwindigkeit) der Ölflüssigkeit und von darin enthaltenen Schmutzpartikeln in der Nähe des Fasermaterials F bis auf Null;
- Zunahme der Dichte des Fasermaterials F ausgehend von der Oberschicht 16.2 in Richtung der Bodenschicht 16.3 der Reinigungsmatte R; und
- Anhaftung von Schmutzpartikeln an dem Fasermaterial F, insbesondere im Bereich der Bodenschicht 16.3 der Reinigungsmatte R, durch "mechanisches Verhaken" und ggf. auch durch Anziehungseffekte im mikroskopischen Bereich.

### Bezugszeichenliste

- 10: Reinigungseinrichtung
- 12: Gehäuse
- 12.1: unterer Bereich (des Gehäuses 12)
- 12.2: oberer Bereich (des Gehäuse 12)
- 13: Deckel
- 14: Einlassöffnung
- 15: Auslassöffnung
- 16: Reinigungskörper
- 16.1: Abschnitt (des Reinigungskörpers 16)
- 16.2: Oberschicht
- 16.3: Bodenschicht
- 17: Faser(n)
- 18: stirnseitige Innenfläche des Deckels
- 20: Trägerplatte
- 22: Trägerkonstruktion
- 24: flächiges Halteelement
- 26: Platte
- 27: Eintrittsöffnung
- 28: Abflachung
- 29: Austrittsöffnung
- 30: Aussparung
- 31: feinmaschiges Gitterelement
- 32: U-Förmiger Abschnitt (der Verbindungsleitung V)
- 34: Reservoir
- E: Ebene(n)
- F: Fasermaterial
- H: Hydraulikleitung
- H': Hydraulikkreislauf
- M: Maschine
- P: Pumpe
- R: Reinigungsmatte
- S: Schaltventil
- V: Verbindungsleitung
- Z: Zwischenraum

## Patentansprüche

1. Reinigungseinrichtung (10) für Flüssigkeiten, insbesondere für Ölflüssigkeiten, umfassend
ein Gehäuse (12), in dem Flüssigkeit enthalten ist oder das von Flüssigkeit durchströmt wird, und
zumindest einen Reinigungskörper (16), der innerhalb des Gehäuses (12) aufgenommen und von der Flüssigkeit beaufschlagbar ist, wobei das Material des Reinigungskörpers (16) derart beschaffen ist, dass darin in der Flüssigkeit enthaltende Verunreinigungen einbring- und aufnehmbar sind, wobei der Reinigungskörper (16) in einem Deckel (13) des Gehäuses (12) oder angrenzend hierzu angebracht ist,
**dadurch gekennzeichnet,**
**dass** der Reinigungskörper (16) Fasermaterial (F) enthält,
**dass** Reinigungskörper (16) zumindest eine Oberschicht (16.2) und eine Bodenschicht (16.3) aufweist,
**dass** in der Oberschicht (16.2) Fasern (17) enthalten sind, die an einem äußeren freien Rand der Oberschicht (16.2) mit ihren jeweiligen freien Enden weg von der Bodenschicht (16.3) und nach aussen ausgerichtet sind, so dass die Oberschicht (16.2) des Reinigungskörpers (16) an ihrem äußeren Rand eine offene Oberfläche aufweist, in die hinein Verunreinigungen und/oder Schmutzpartikel einbringbar sind, und
**dass** die Dichte der Bodenschicht (16.3) größer ist als die Dichte der Oberschicht (16.2), wobei der Reinigungskörper (16) mit seiner Bodenschicht (16.3) an dem Gehäuse (12) oder einem Teil davon angebracht ist und entsprechend die Oberschicht (16.2) des Reinigungskörpers (16) von der Flüssigkeit beaufschlagbar ist.

2. Reinigungseinrichtung (10) nach Anspruch 1, **dadurch gekennzeichnet, dass** der Reinigungskörper (16) zumindest an der stirnseitigen Innenfläche (18) des Deckels (13) angebracht ist.

3. Reinigungseinrichtung (10) nach Anspruch 2, **dadurch gekennzeichnet, dass** der Reinigungskörper (16) die stirnseitige Innenfläche (18) des Deckels (13) vollständig bedeckt.

4. Reinigungseinrichtung (10) nach Anspruch 2, **dadurch gekennzeichnet, dass** der Reinigungskörper (16) an zumindest einer Stelle einen Abschnitt (16.1) aufweist, der von der Innenfläche (18) des Deckels (13) abragt.

5. Reinigungseinrichtung (10) nach Anspruch 1, **dadurch gekennzeichnet, dass** der Reinigungskörper (16) an einer Trägerplatte (20) angebracht ist, wobei die Trägerplatte (20) durch den Deckel (13) an dem Gehäuse (12) befestigbar oder mittels eines zweiteiligen Deckels (13) angrenzend zum Gehäuse (12) klemmbar befestigbar ist.

6. Reinigungseinrichtung (10) nach Anspruch 1, **dadurch gekennzeichnet, dass** an der stirnseitigen Innenfläche (18) des Deckels (13) eine Trägerkonstruktion (22) mit einem flächigen Halteelement (24) angebracht ist, wobei der Reinigungskörper (16) an zumindest einer Oberfläche des Halteelements (24) befestigt ist, vorzugsweise, dass der Reinigungskörper (16) an einer der stirnseitigen Innenfläche (18) des Deckels (13) zugewandten Rückseite des Halteelements (24) angebracht ist, weiter vorzugsweise, dass ein Reinigungskörper (16) jeweils an den entgegengesetzten Oberflächen des Halteelements (24) befestigt ist.

7. Reinigungseinrichtung (10) nach Anspruch 6, **dadurch gekennzeichnet, dass** das Halteelement (24) derart an der Trägerkonstruktion (22) angebracht ist, dass seine Oberflächen parallel zur stirnseitigen Innenfläche (18) des Deckels (13) angeordnet sind.

8. Reinigungseinrichtung (10) nach Anspruch 1, **dadurch gekennzeichnet, dass** an der Innenumfangsfläche des Deckels (13) zumindest eine Platte (26) insbesondere in Form einer kreisförmigen Scheibe angebracht ist, die parallel zur stirnseitigen Innenfläche (18) des Deckels (13) und beabstandet hierzu angeordnet ist, wobei der Reinigungskörper (16) an einer der stirnseitigen Innenfläche (18) des Deckels (13) zugewandten Rückseite der Platte (26) angebracht ist, wobei für die Platte (26) an oder in deren oberem Bereich eine Eintrittsöffnung (27)und an oder in deren unterem Bereich eine Austrittsöffnung (29) für die Flüssigkeit vorgesehen ist.

9. Reinigungseinrichtung (10) nach Anspruch 8, **dadurch gekennzeichnet, dass** die Eintrittsöffnung (27) durch eine Abflachung der Platte (26) ausgebildet ist, so dass die Flüssigkeit vorbei an der Abflachung von oben her in den Zwischenraum (Z) eintreten kann, der einerseits von der Rückseite der Platte (26) und andererseits von der stirnseitigen Innenfläche (18) des Deckels (13) begrenzt wird.

10. Reinigungseinrichtung (10) nach Anspruch 8 oder 9, **dadurch gekennzeichnet, dass** die Austrittsöffnung (29) durch eine Aussparung (30) gebildet ist, die in der Scheibe ausgebildet ist, so dass Flüssigkeit aus dem zwischen der Rückseite der Platte (26) und der stirnseitigen Innenfläche (18) des Deckels (13) begrenzten Zwischenraum (Z) durch die Aussparung (30) zurück in einen Innenraum des Gehäuses (12) strömen kann, an den die Vorderseite der Platte (26) angrenzt.

11. Reinigungseinrichtung (10) nach Anspruch 10, **dadurch gekennzeichnet, dass** in der Aussparung (30) ein feinmaschiges Gitterelement (31) aufgenommen ist, das ein Hindurchtreten von einzelnen Fasern (17) unterbindet.

12. Reinigungseinrichtung (10) nach Anspruch 11, **dadurch gekennzeichnet, dass** an der Innenumfangsfläche des Deckels (13) parallel zueinander zwei Platten (26) angebracht sind, die parallel zur stirnseitigen Innenfläche (18) des Deckels (13) und beabstandet hierzu angeordnet ist, wobei das feinmaschige Gitterelement (31) zwischen den beiden Platten (26) angeordnet ist und dadurch in oder angrenzend zu den jeweiligen Aussparungen (30) der Platten (26) gehalten wird.

13. Reinigungseinrichtung (10) nach Anspruch 8, **dadurch gekennzeichnet, dass** entlang des Aussenumfangs der Platte (26) zumindest drei, vorzugsweise fünf Aussparungen (30) ausgebildet sind, die zueinander jeweils gleichmäßig voneinander beabstandet sind.

14. Reinigungseinrichtung (10) nach einem der vorhergehenden Ansprüche, **dadurch gekennzeichnet, dass** der Reinigungskörper (16) an einer Innenumfangsfläche des Deckels (13) angebracht ist, vorzugsweise, dass der Reinigungskörper (16) die Innenumfangsfläche des Deckels (13) vollständig bedeckt.

15. Reinigungseinrichtung (10) für Flüssigkeiten, insbesondere für Ölflüssigkeiten,
umfassend
ein Gehäuse (12) mit einer Einlassöffnung (14) und einer Auslassöffnung (15) für die Flüssigkeit, wobei das Gehäuse (12) von der Flüssigkeit von der Einlassöffnung (14) in Richtung der Auslassöffnung (15) durchströmbar ist, und
zumindest einen Reinigungskörper (16), der innerhalb des Gehäuses (12) aufgenommen und von der Flüssigkeit beaufschlagbar ist, wobei das Material des Reinigungskörpers (16) derart beschaffen ist, dass darin in der Flüssigkeit enthaltende Verunreinigungen einbring- und aufnehmbar sind, wobei in dem Gehäuse (12) mehrere Ebenen (E) vorgesehen sind und an diesen Ebenen (E) an zumindest einer Seite davon jeweils zumindest ein Reinigungskörper (16) vorzugsweise vollflächig angebracht ist,
**dadurch gekennzeichnet,**
**dass** das Material des Reinigungskörpers (16) derart beschaffen ist, dass darin in der Flüssigkeit enthaltende Verunreinigungen einbring- und aufnehmbar sind,
**dass** die Einlassöffnung (14) an einer Seite des Gehäuses (12) in einem unteren Bereich (12.1) und die Auslassöffnung (15) an einer entgegengesetzten Seite des Gehäuses (12) in einem oberen Bereich (12.2) davon ausgebildet sind,
**dass** die Ebenen (E) in dem Gehäuse (12) derart nebeneinander angeordnet sind, dass das Gehäuse (12) von der Flüssigkeit von der Einlassöffnung (14) in Richtung der Auslassöffnung (15) mänderförmig durchströmbar ist, und
**dass** die Ebenen (E) in dem Gehäuse (12) - in vertikaler Richtung gesehen - jeweils übereinander angeordnet sind, so dass das Gehäuse (12) von der Flüssigkeit von der Einlassöffnung (14) zur Auslassöffnung (15) - in vertikaler Richtung gesehen - mäanderförmig durchströmbar ist.

16. Reinigungseinrichtung (10) nach Anspruch 15, **dadurch gekennzeichnet, dass** die Einlassöffnung (14) in dem Gehäuse (12) an einer linken oder rechten Seite vorgesehen ist, wobei die Auslassöffnung (15) in dem Gehäuse (12) an einer entgegengesetzten Seite, d.h. an der rechten oder linken Seite des Gehäuses (12) vorgesehen ist.

17. Reinigungseinrichtung (10) nach Anspruch 15 oder 16, **dadurch gekennzeichnet, dass** die Ebenen (E) in dem Gehäuse (12) jeweils horizontal und parallel zueinander angeordnet sind.

18. Reinigungseinrichtung (10) für Flüssigkeiten, insbesondere für Ölflüssigkeiten,
umfassend
ein Gehäuse (12) mit einer Einlassöffnung (14) und einer Auslassöffnung (15) für die Flüssigkeit, wobei das Gehäuse (12) von der Flüssigkeit von der Einlassöffnung (14) in Richtung der Auslassöffnung (15) durchströmbar ist, und
zumindest einen Reinigungskörper (16), der innerhalb des Gehäuses (12) aufgenommen und von der Flüssigkeit beaufschlagbar ist, wobei das Material des Reinigungskörpers (16) derart beschaffen ist, dass darin in der Flüssigkeit enthaltende Verunreinigungen einbring- und aufnehmbar sind, wobei das Gehäuse (12) in Form einer Verbindungsleitung (V) ausgebildet ist undder Reinigungskörper (16) innerhalb der Verbindungsleitung (V) an deren Innenumfangsfläche angebracht ist,
**dadurch gekennzeichnet,**
**dass** der Reinigungskörper (16) Fasermaterial (F) enthält.

19. Reinigungseinrichtung (10) nach Anspruch 18, **dadurch gekennzeichnet, dass** der Reinigungskörper (16) innerhalb der Verbindungsleitung (V) entlang von deren gesamter Längserstreckung und/oder insbesondere vollflächig an deren Innenumfangsfläche angebracht ist.

20. Reinigungseinrichtung (10) nach Anspruch 18, **dadurch gekennzeichnet, dass** die Verbindungsleitung (V) einen U-förmigen Abschnitt (32) aufweist, wobei der Reinigungskörper (16) innerhalb der Verbindungsleitung (V) entlang von deren U-förmigen Abschnitt (32) vorgesehen ist.

21. Reinigungseinrichtung (10) nach einem der Ansprüche 18 bis 20, **dadurch gekennzeichnet, dass** die Verbindungsleitung (V) in Form eines insbesondere flexiblen Schlauchs ausgebildet ist, vorzugsweise, dass der flexible Schlauch aus Kunststoff hergestellt ist.

22. Reinigungseinrichtung (10) nach einem der vorhergehenden Ansprüche, **dadurch gekennzeichnet, dass** der Reinigungskörper (16) aus porösem Material besteht oder poröses Material aufweist.

23. Reinigungseinrichtung (10) nach einem der vorhergehenden Ansprüche, **dadurch gekennzeichnet, dass** der Reinigungskörper (16) in Form einer Reinigungsmatte (R) mit einer faserigen Beschaffenheit ausgebildet ist.

24. Reinigungseinrichtung (10) nach einem der Ansprüche 15 bis 23, **dadurch gekennzeichnet, dass** der Reinigungskörper (16) zumindest eine Oberschicht (16.2) und eine Bodenschicht (16.3) aufweist, wobei die Dichte der Bodenschicht (16.3) größer ist als die Dichte der Oberschicht (16.2), wobei der Reinigungskörper (16) mit seiner Bodenschicht (16.3) an dem Gehäuse (12) oder einem Teil davon angebracht ist und entsprechend die Oberschicht (16.2) des Reinigungskörpers (16) von der Flüssigkeit beaufschlagbar ist.

25. Reinigungseinrichtung (10) nach Anspruch 24, soweit rückbezogen auf Anspruch 23, **dadurch gekennzeichnet, dass** in der Oberschicht (16.2) Fasern (17) enthalten sind, die an einem äußeren freien Rand der Oberschicht (16.2) mit ihren jeweiligen freien Enden weg von der Bodenschicht (16.3) und nach aussen ausgerichtet sind, so dass die Oberschicht (16.2) des Reinigungskörpers (16) an ihrem äußeren Rand eine offene Oberfläche aufweist, in die hinein Verunreinigungen und/oder Schmutzpartikel einbringbar sind.

26. Reinigungseinrichtung (10) nach einem der Ansprüche 22 bis 25, soweit rückbezogen auf einen der Ansprüche 6 bis 13, **dadurch gekennzeichnet, dass** der Reinigungskörper (16) an einer Oberfläche des Halteelements (24) (24) bzw. der Platte (26) derart angebracht sind, dass das poröse Material bzw. die Fasern (17) des Reinigungskörpers (16) der stirnseitigen Innenfläche (18) des Deckels (13) zugewandt sind, vorzugsweise, dass die in der Oberschicht (16.3) des Reinigungskörpers (26) enthaltenen Fasern (17) mit ihren äußeren freien Enden die stirnseitige Innenfläche (18) des Deckels (13) berühren.

27. Hydraulikleitung (H), die von einer Flüssigkeit insbesondere in Form einer Ölflüssigkeit bzw. eines Hydrauliköls durchströmbar ist,
**dadurch gekennzeichnet,**
**dass** in die Hydraulikleitung (H) zumindest eine Reinigungseinrichtung (10) nach einem der Ansprüche 1 bis 26 eingebunden bzw. integriert ist.

28. Hydraulikleitung (H) nach Anspruch 27, **dadurch gekennzeichnet, dass** in die Hydraulikleitung (H) zumindest zwei Reinigungseinrichtungen (10) nach einem der Ansprüche 1 bis 26 eingebunden sind, wobei diese Reinigungseinrichtungen (10) zueinander parallel geschaltet sind.

29. Hydraulikleitung (H) nach Anspruch 27 oder 28, **dadurch gekennzeichnet, dass** stromaufwärts der Reinigungseinrichtungen (10) ein Schaltventil (S) angeordnet ist, mit dem eine Strömung der Flüssigkeit in zumindest einen bestimmten Zweig der Hydraulikleitung (H) schaltbar ist.

30. Hydraulikkreislauf (H') für eine Maschine (M), in dem eine Flüssigkeit insbesondere in Form einer Ölflüssigkeit bzw. eines Hydrauliköls umgewälzt wird, **dadurch gekennzeichnet,**
**dass** in den Hydraulikkreislauf (H) zumindest eine Reinigungseinrichtung (10) nach einem der Ansprüche 1 bis 26 eingebunden bzw. integriert ist.

## Claims

1. Cleaning device (10) for liquids, particularly for oil liquids, comprising
a housing (12) which contains liquid or through which liquid flows, and
at least one cleaning body (16) which is received within the housing (12) and can be acted on by the liquid, wherein the material of the cleaning body (16) is such that contaminants present in the liquid can be introduced into and taken up in the material, wherein the cleaning body (16) is mounted in a cover (13) of the housing (12) or adjacent thereto,
**characterised in that**
the cleaning body (16) contains fibrous material (F),
the cleaning body (16) has at least one upper layer (16.2) and base layer (16.3),
present in the upper layer (16.2) are fibres (17) which at an outer free edge of the upper layer (16.2) are oriented by the respective free ends thereof away from the base layer (16.3) and outwardly so that the upper layer (16.2) of the cleaning body (16) has at its outer edge an open surface into which contaminants and/or dirt particles are introducible, and
the density of the base layer (16.3) is greater than the density of the upper layer (16.2), wherein the cleaning body (16) is mounted by its base layer (16.3) on the housing (12) or a part thereof and accordingly the upper layer (16.2) of the cleaning body (16) can be acted on by the liquid.

2. Cleaning device (10) according to claim 1, **characterised in that** the cleaning body (16) is mounted at least on the end-face inner surface (18) of the cover (13).

3. Cleaning device (10) according to claim 2, **characterised in that** the cleaning body (16) completely covers the end-face inner surface (18) of the cover (13).

4. Cleaning device (10) according to claim 2, **characterised in that** the cleaning body (16) has at at least one place a section (16.1) projecting away from the inner surface (18) of the cover (13).

5. Cleaning device (10) according to claim 1, **characterised in that** the cleaning body (16) is mounted on a support plate (20), wherein the support plate (20) is fastenable by the cover (13) to the housing (12) or is fastenable by means of a two-part cover (13) adjacent to the housing (12) by clamping.

6. Cleaning device (10) according to claim 1, **characterised in that** a support construction (22) with a flat holding element (24) is mounted on the end-face inner surface (18) of the cover (13), wherein the cleaning body (16) is fastened to at least one surface of the holding element (24), preferably such that the cleaning body (16) is mounted on a rear side, which faces the end-face inner surface (18) of the cover (13), of the holding element (24), further preferably such that a respective cleaning body (16) is fastened to each of the opposite surfaces of the holding element (24).

7. Cleaning device (10) according to claim 6, **characterised in that** the holding element (24) is mounted on the support construction (22) in such a way that its surfaces are arranged parallel to the end-face inner surface (18) of the cover (13).

8. Cleaning device (10) according to claim 1, **characterised in that** at least one plate (26), particularly in the form of a circular disc, is mounted on the inner circumferential surface of the cover (13) and is arranged parallel to the end-face inner surface (18) of the cover (13) and at a spacing therefrom, wherein the cleaning body (16) is mounted on a rear side, which faces the end-face inner surface (18) of the cover (13), of the plate (26), wherein provided for the plate (26) at or in the upper region thereof is an inlet opening (27) and at or in the lower region thereof an outlet opening (29) for the liquid.

9. Cleaning device (10) according to claim 8, **characterised in that** the inlet opening (27) is formed by a flattening of the plate (26) so that the liquid can enter past the flattening from above into the intermediate space (Z), which is bounded on the one hand by the rear side of the plate (26) and on the other hand by the end-face inner surface (18) of the cover (13).

10. Cleaning device (10) according to claim 8 or 9, **characterised in that** the outlet opening (29) is formed by a cut-out (30), which is formed in the disc, so that liquid can flow from the intermediate space (Z), which is bounded between the rear side of the plate (26) and the end-face inner surface (18) of the cover (13), through the cut-out (30) back into an interior space of the housing (12), which is adjoined by the front side of the plate (26).

11. Cleaning device (10) according to claim 10, **characterised in that** a fine-mesh grid element (31) preventing passage of individual fibres (17) is received in the cut-out (30).

12. Cleaning device (10) according to claim 11, **characterised in that** mounted on the inner circumferential surface of the cover (13) and parallel to one another are two plates (26) which are arranged parallel to the end-face inner surface (18) of the cover (13) and at a spacing therefrom, wherein the fine-mesh grid element (31) is arranged between the two plates (26) and is thereby held in or adjacent to the respective cut-outs (30) of the plates (26).

13. Cleaning device (10) according to claim 8, **characterised in that** at least three, preferably five, cut-outs (30), which with respect to one another are respectively equidistantly spaced, are formed along the outer circumference of the plate (26).

14. Cleaning device (10) according to any one of the preceding claims, **characterised in that** the cleaning body (16) is mounted on an inner circumferential surface of the cover (13), preferably such that the cleaning body (16) completely covers the inner circumferential surface of the cover (13).

15. Cleaning device (10) for liquids, particularly for oil liquids, comprising
a housing (12) with an inlet opening (14) and an outlet opening (15) for the liquid, wherein the housing (12) can be flowed through by the liquid from the inlet opening (14) in the direction of the outlet opening (15)
and
at least one cleaning body (16) which is received within the housing (12) and can be acted on by the liquid, wherein the material of the cleaning body (16) is such that contaminants present in the liquid can be introduced and taken up in the material, wherein a plurality of planes (E) is provided in the housing (12) and at least one respective cleaning body (16) is mounted, preferably over the whole area, at each of these planes (E) at at least one side thereof,
**characterised in that**
the material of the cleaning body (16) is such that contaminants present in the liquid can be introduced into and taken up in the material,
the inlet opening (14) is formed at a side of the housing (12) in a lower region (12.1) and the outlet opening (15) is formed at an opposite side of the housing (12) in an upper region (12.2) thereof,
the planes (E) in the housing (12) are so arranged adjacent to one another that the housing (12) can be flowed through by the liquid from the inlet opening (14) in the direction of the outlet opening (15) in meandering manner, and
the planes (E) are respectively arranged one above the other in the housing (12) as seen in vertical direction so that the housing (12) can be flowed through by the liquid from the inlet opening (14) to the outlet opening (15) in meandering manner as seen in vertical direction.

16. Cleaning device (10) according to claim 15, **characterised in that** the inlet opening (14) is provided in the housing (12) at a lefthand or righthand side, wherein the outlet opening (15) is provided in the housing (12) at an opposite side, i.e. at the righthand or lefthand side of the housing (12).

17. Cleaning device (10) according to claim 15 or 16, **characterised in that** the planes (E) are arranged in the housing (12) respectively horizontally and parallel to one another.

18. Cleaning device (10) for liquids, particularly for oil liquids, comprising
a housing (12) with an inlet opening (14) and an outlet opening (15) for the liquid, wherein the housing (12) can be flowed through by the liquid from the inlet opening (14) in the direction of the outlet opening (15),
and
at least one cleaning body (16) which is received within the housing (12) and can be acted on by the liquid, wherein the material of the cleaning body (16) is such that contaminants present in the liquid can be introduced into and taken up in the material, wherein the housing (12) is configured in the form of a connecting line (V) and the cleaning body (16) is mounted within the connecting line (V) at the inner circumferential surface thereof,
**characterised in that**
the cleaning body (16) contains fibrous material (F).

19. Cleaning device (10) according to claim 18, **characterised in that** the cleaning body (16) is mounted within the connecting line (V) along the entire length dimension thereof and/or in particular over the whole area on the inner circumferential surface thereof.

20. Cleaning device (10) according to claim 18, **characterised in that** the connecting line (V) has a U-shaped section (32), wherein the cleaning body (16) is provided within the connecting line (V) along the U-shaped section (32) thereof.

21. Cleaning device (10) according to any one of claims 18 to 20, **characterised in that** the connecting line (V) is constructed in the form of a particularly flexible hose, preferably **in that** the flexible hose is produced from plastics material.

22. Cleaning device (10) according to any one of the preceding claims, **characterised in that** the cleaning body (16) consists of porous material or comprises porous material.

23. Cleaning device (10) according to any one of the preceding claims, **characterised in that** the cleaning body (16) is constructed in the form of a cleaning mat (R) with a fibrous character.

24. Cleaning device (10) according to any one of claims 15 to 23, **characterised in that** the cleaning body (16) has at least one upper layer (16.2) and base layer (16.3), wherein the density of the base layer (16.3) is greater than the density of the upper layer (16.2), wherein the cleaning body (16) is mounted by its base layer (16.3) on the housing (12) or a part thereof and accordingly the upper layer (16.2) of the cleaning body (16) can be acted on by the liquid.

25. Cleaning device (10) according to claim 24 sofar as dependent on claim 23, **characterised in that** present in the upper layer (16.2) are fibres (17) which at an outer free edge of the upper layer (16.2) are oriented with their respective free ends away from the base layer (16.3) and outwardly so that the upper layer (16.2) of the cleaning body (16) has at its outer edge an open surface into which contaminants and/or dirt particles are introducible.

26. Cleaning device (10) according to any one of claims 22 to 25 sofar as dependent on any one of claims 6 to 13, **characterised in that** the cleaning body (16) is mounted on a surface of the holding element (24) or plate (26) in such a way that the porous material or the fibres (17) of the cleaning body (16) face the end-face inner surface (18) of the cover (13), preferably **in that** the fibres (17) present in the upper layer (16.3) of the cleaning body (16) contact the end-face inner surface (18) of the cover (13) by their outer free ends.

27. Hydraulic line (H) which can be flowed through by a liquid, particularly in the form of an oil liquid or a hydraulic oil,
**characterised in that**
at least one cleaning device (10) according to any one of claims 1 to 26 is incorporated into or integrated in the hydraulic line (H).

28. Hydraulic line (H) according to claim 27, **characterised in that** at least two cleaning devices (10) according to any one of claims 1 to 26 are incorporated into the hydraulic line (H), wherein these cleaning devices (10) are connected in parallel with one another.

29. Hydraulic line (H) according to claim 27 or 28, **characterised in that** arranged upstream of the cleaning devices (10) is a switching valve (S) by which a flow of the liquid is switchable into at least one defined branch of the hydraulic line (H).

30. Hydraulic circuit (H') for a machine (M) in which a liquid, particularly in the form of an oil liquid or a hydraulic oil, is circulated,
**characterised in that**
at least one cleaning device (10) according to any one of claims 1 to 26 is incorporated into or integrated in the hydraulic circuit (H).

## Revendications

1. Dispositif de nettoyage (10) pour liquides, en particulier pour des liquides huileux, comprenant
un boîtier (12) contenant du liquide ou traversé par du liquide, et
au moins un corps de nettoyage (16) logé à l'intérieur du boîtier (12) et pouvant être exposé au liquide, le matériau du corps de nettoyage (16) étant conçu de manière à ce que les impuretés contenues dans le liquide puissent y être introduites et absorbées, le corps de nettoyage (16) étant fixé dans un couvercle (13) du boîtier (12) ou à proximité de celui-ci,
**caractérisé**
**en ce que** le corps de nettoyage (16) contient un matériau fibreux (F),
**en ce que** le corps de nettoyage (16) comporte au moins une couche supérieure (16.2) et une couche inférieure (16.3),
**en ce que** la couche supérieure (16.2) contient des fibres (17) qui, à un bord libre extérieur de la couche supérieure (16.2), sont orientées avec leurs extrémités libres respectives vers l'extérieur, éloignées de la couche inférieure (16.3), de sorte que la couche supérieure (16.2) du corps de nettoyage (16) présente une surface ouverte à son bord extérieur, dans laquelle des impuretés et/ou des particules de saleté peuvent être introduites, et
**en ce que** la densité de la couche inférieure (16.3) est supérieure à la densité de la couche supérieure (16.2), le corps de nettoyage (16) étant fixé au boîtier (12) ou à une partie de celui-ci par sa couche inférieure (16.3) et, en conséquence, la couche supérieure (16.2) du corps de nettoyage (16) pouvant être exposé au liquide.

2. Dispositif de nettoyage (10) selon la revendication 1, **caractérisé en ce que** le corps de nettoyage (16) est fixé au moins à la surface intérieure frontale (18) du couvercle (13).

3. Dispositif de nettoyage (10) selon la revendication 2, **caractérisé en ce que** le corps de nettoyage (16) recouvre entièrement la surface intérieure frontale (18) du couvercle (13).

4. Dispositif de nettoyage (10) selon la revendication 2, **caractérisé en ce que** le corps de nettoyage (16) présente une section (16.1) en au moins un point qui fait saillie depuis la surface intérieure (18) du couvercle (13).

5. Dispositif de nettoyage (10) selon la revendication 1, **caractérisé en ce que** le corps de nettoyage (16) est fixé à une plaque de support (20), la plaque de support (20) pouvant être fixée au boîtier (12) par le couvercle (13) ou fixée par serrage à proximité du boîtier (12) au moyen d'un couvercle en deux parties (13).

6. Dispositif de nettoyage (10) selon la revendication 1, **caractérisé en ce qu'**une structure de support (22) avec un élément de maintien plat (24) est fixée à la surface intérieure frontale (18) du couvercle (13), le corps de nettoyage (16) étant fixé à au moins une surface de l'élément de maintien (24), de préférence, le corps de nettoyage (16) étant fixé à une face de l'élément de maintien (24) tournée vers la surface intérieure frontale (18) du couvercle (13), de préférence encore, un corps de nettoyage (16) étant fixé aux faces opposées de l'élément de maintien (24).

7. Dispositif de nettoyage (10) selon la revendication 6, **caractérisé en ce que** l'élément de maintien (24) est fixé à la structure de support (22) de manière à ce que ses surfaces soient parallèles à la surface intérieure frontale (18) du couvercle (13).

8. Dispositif de nettoyage (10) selon la revendication 1, **caractérisé en ce qu'**au moins une plaque (26), notamment sous la forme d'un disque circulaire, est disposée à la surface intérieure périphérique du couvercle (13), cette plaque étant disposée parallèlement à la surface intérieure frontale (18) du couvercle (13) et à distance de celle-ci, le corps de nettoyage (16) étant fixé à une face arrière de la plaque (26) tournée vers la surface intérieure frontale (18) du couvercle (13), une ouverture d'entrée (27) étant prévue à ou dans la partie supérieure de la plaque (26), et une ouverture de sortie (29) étant prévue à ou dans sa partie inférieure pour le liquide.

9. Dispositif de nettoyage (10) selon la revendication 8, **caractérisé en ce que** l'ouverture d'entrée (27) est formée par un aplatissement de la plaque (26), de sorte que le liquide puisse entrer au-delà de l'aplatissement par le haut dans l'espace intermédiaire (Z) défini d'une part par la face arrière de la plaque (26) et d'autre part par la surface intérieure frontale (18) du couvercle (13).

10. Dispositif de nettoyage (10) selon la revendication 8 ou 9, **caractérisé en ce que** l'ouverture de sortie (29) est formée par une encoche (30) pratiquée dans le disque, de sorte que le liquide puisse s'écouler de l'espace intermédiaire (Z) défini entre la face arrière de la plaque (26) et la surface intérieure frontale (18) du couvercle (13) par l'encoche (30) pour retourner vers un espace intérieur du boîtier (12) auquel la face avant de la plaque (26) est adjacente.

11. Dispositif de nettoyage (10) selon la revendication 10, **caractérisé en ce qu'**un élément de grille à mailles fines (31) est inséré dans l'encoche (30), empêchant le passage de fibres individuelles (17).

12. Dispositif de nettoyage (10) selon la revendication 11, **caractérisé en ce que** deux plaques (26) parallèles l'une à l'autre sont fixées à la surface intérieure périphérique du couvercle (13), qui sont disposées parallèlement à la surface intérieure frontale (18) du couvercle (13) et à distance de celle-ci, l'élément de grille à mailles fines (31) étant disposé entre les deux plaques (26) et ainsi maintenu dans ou adjacent aux encoches (30) respectives des plaques (26).

13. Dispositif de nettoyage (10) selon la revendication 8, **caractérisé en ce qu'**au moins trois, de préférence cinq encoches (30) sont formées le long de la périphérie extérieure de la plaque (26), qui sont espacées régulièrement les unes des autres.

14. Dispositif de nettoyage (10) selon l'une des revendications précédentes, **caractérisé en ce que** le corps de nettoyage (16) est fixé à une surface intérieure périphérique du couvercle (13), de préférence **en ce que** le corps de nettoyage (16) recouvre entièrement la surface intérieure périphérique du couvercle (13).

15. Dispositif de nettoyage (10) pour liquides, en particulier pour des liquides huileux,
comprenant
un boîtier (12) avec une ouverture d'entrée (14) et une ouverture de sortie (15) pour le liquide, le boîtier (12) pouvant être traversé par le liquide de l'ouverture d'entrée (14) vers l'ouverture de sortie (15), et
au moins un corps de nettoyage (16) logé à l'intérieur du boîtier (12) et pouvant être exposé au liquide, le matériau du corps de nettoyage (16) étant conçu de manière à ce que les impuretés contenues dans le liquide puissent y être introduites et absorbées, plusieurs plans (E) étant prévus dans le boîtier (12) et au moins un corps de nettoyage (16) étant fixé à chacun de ces plans (E) à au moins une face de celui-ci, de préférence sur toute sa surface,
**caractérisé**
**en ce que** le matériau du corps de nettoyage (16) est conçu de manière à ce que les impuretés contenues dans le liquide puissent y être introduites et absorbées,
**en ce que** l'ouverture d'entrée (14) est formée sur un côté du boîtier (12) dans une zone inférieure (12.1) et l'ouverture de sortie (15) est formée sur un côté opposé du boîtier (12) dans une zone supérieure (12.2) de celui-ci,
**en ce que** les plans (E) dans le boîtier (12) sont disposés côte à côte de manière à ce que le boîtier (12) puisse être traversé par le liquide en suivant un parcours sinueux de l'ouverture d'entrée (14) vers l'ouverture de sortie (15), et
**en ce que** les plans (E) dans le boîtier (12) sont disposés - vus dans la direction verticale - les uns au-dessus des autres, de sorte que le boîtier (12) puisse être traversé par le liquide de l'ouverture d'entrée (14) vers l'ouverture de sortie (15) suivant - vu dans la direction verticale - un parcours sinueux.

16. Dispositif de nettoyage (10) selon la revendication 15, **caractérisé en ce que** l'ouverture d'entrée (14) est formée dans le boîtier (12) sur un côté gauche ou droit, l'ouverture de sortie (15) étant formée dans le boîtier (12) sur le côté opposé, c'est-à-dire sur le côté droit ou gauche du boîtier (12).

17. Dispositif de nettoyage (10) selon la revendication 15 ou 16, **caractérisé en ce que** les plans (E) dans le boîtier (12) sont disposés horizontalement et parallèlement les uns aux autres.

18. Dispositif de nettoyage (10) pour liquides, notamment pour liquides huileux,
comprenant
un boîtier (12) avec une ouverture d'entrée (14) et une ouverture de sortie (15) pour le liquide, le boîtier (12) pouvant être traversé par le liquide depuis l'ouverture d'entrée (14) en direction de l'ouverture de sortie (15), et
au moins un corps de nettoyage (16) situé à l'intérieur du boîtier (12) et pouvant être exposé au liquide, le matériau du corps de nettoyage (16) étant conçu de manière à pouvoir incorporer et retenir les impuretés contenues dans le liquide, le boîtier (12) étant formé comme une conduite de raccordement (V) et le corps de nettoyage (16) étant fixé sur la surface intérieure de la conduite de raccordement (V),
**caractérisé**
**en ce que** le corps de nettoyage (16) contient un matériau fibreux (F).

19. Dispositif de nettoyage (10) selon la revendication 18, **caractérisé en ce que** le corps de nettoyage (16) est disposé à l'intérieur de la conduite de raccordement (V) le long de toute son extension longitudinale et/ou en particulier de manière à couvrir complètement sa surface intérieure.

20. Dispositif de nettoyage (10) selon la revendication 18, **caractérisé en ce que** la conduite de raccordement (V) comporte une section en forme de U (32), le corps de nettoyage (16) étant disposé à l'intérieur de la conduite de raccordement (V) le long de cette section en forme de U (32).

21. Dispositif de nettoyage (10) selon l'une des revendications 18 à 20, **caractérisé en ce que** la conduite de raccordement (V) est formée comme un tuyau flexible, de préférence **en ce que** le tuyau flexible est fabriqué en plastique.

22. Dispositif de nettoyage (10) selon l'une des revendications précédentes, **caractérisé en ce que** le corps de nettoyage (16) est composé d'un matériau poreux ou comprend un matériau poreux.

23. Dispositif de nettoyage (10) selon l'une des revendications précédentes, **caractérisé en ce que** le corps de nettoyage (16) est formé comme une nappe de nettoyage (R) avec une structure fibreuse.

24. Dispositif de nettoyage (10) selon l'une des revendications 15 à 23, **caractérisé en ce que** le corps de nettoyage (16) comporte au moins une couche supérieure (16.2) et une couche inférieure (16.3), la densité de la couche inférieure (16.3) étant supérieure à la densité de la couche supérieure (16.2), le corps de nettoyage (16) étant fixé au boîtier (12) ou à une partie de celui-ci avec sa couche inférieure (16.3), de sorte que la couche supérieure (16.2) du corps de nettoyage (16) puisse être exposée au liquide.

25. Dispositif de nettoyage (10) selon la revendication 24, si elle dépend de la revendication 23, **caractérisé en ce que** des fibres (17) sont incluses dans la couche supérieure (16.2), ces fibres étant orientées, à un bord libre extérieur de la couche supérieure (16.2), avec leurs extrémités libres respectives vers l'extérieur, éloignées de la couche inférieure (16.3), de sorte que la couche supérieure (16.2) du corps de nettoyage (16) présente une surface ouverte à son bord extérieur, dans laquelle des impuretés et/ou des particules de saleté peuvent être introduites.

26. Dispositif de nettoyage (10) selon l'une des revendications 22 à 25, si elles se dépendent de l'une des revendications 6 à 13, **caractérisé en ce que** le corps de nettoyage (16) est fixé sur une surface de l'élément de support (24) (24) ou de la plaque (26), de sorte que le matériau poreux ou les fibres (17) du corps de nettoyage (16) sont orientés vers la surface intérieure frontale (18) du couvercle (13), de préférence de sorte que les fibres (17) contenues dans la couche supérieure (16.3) du corps de nettoyage (26) touchent avec leurs extrémités libres la surface intérieure frontale (18) du couvercle (13).

27. Conduite hydraulique (H) pouvant être traversée par un liquide, notamment un liquide huileux ou une huile hydraulique,
**caractérisée**
**en ce qu'**au moins un dispositif de nettoyage (10) selon l'une des revendications 1 à 26 est intégré ou incorporé dans la conduite hydraulique (H).

28. Conduite hydraulique (H) selon la revendication 27, **caractérisée en ce qu'**au moins deux dispositifs de nettoyage (10) selon l'une des revendications 1 à 26 sont intégrés dans la conduite hydraulique (H), ces dispositifs de nettoyage (10) étant disposés en parallèle les uns aux autres.

29. Conduite hydraulique (H) selon la revendication 27 ou 28, **caractérisée en ce qu'**une vanne de commutation (S) est disposée en amont des dispositifs de nettoyage (10), permettant de diriger le flux de liquide vers au moins une branche spécifique de la conduite hydraulique (H).

30. Circuit hydraulique (H') pour une machine (M), dans lequel un liquide, notamment un liquide huileux ou une huile hydraulique, est circulé,
**caractérisé**
**en ce qu'**au moins un dispositif de nettoyage (10) selon l'une des revendications 1 à 26 est intégré ou incorporé dans le circuit hydraulique (H).
